# EUROPÄISCHE PATENTSCHRIFT

(11) **EP 3 817 864 B1**
(45) Veröffentlichungstag und Bekanntmachung des Hinweises auf die Patenterteilung: **06.07.2022**
(21) Anmeldenummer: 19745579.3
(22) Anmeldetag: 18.07.2019
(51) Int. Cl.: B05B 13/02, B21B 45/02, F16N 29/00, B05B 5/00, B05B 5/08, B05B 12/00, B05B 12/08, B05B 7/02, B05B 7/12, B21D 37/18, B21D 22/20

(54) **VERFAHREN ZUR AUTOMATISIERTEN STEUERUNG UND REGELUNG EINER MASCHINE ZUR SCHMIERMITTELAUFBRINGUNG SOWIE EINRICHTUNG ZUR AUTOMATISIERTEN STEUERUNG UND REGELUNG EINER MASCHINE ZUR SCHMIERMITTELAUFBRINGUNG**
METHOD FOR THE AUTOMATED OPEN-LOOP AND CLOSED-LOOP CONTROL OF A MACHINE FOR LUBRICANT APPLICATION AND DEVICE FOR THE AUTOMATED OPEN-LOOP AND CLOSED-LOOP CONTROL OF A MACHINE FOR LUBRICANT APPLICATION
PROCÉDÉ POUR LA COMMANDE ET LA RÉGULATION AUTOMATISÉES D'UNE MACHINE POUR L'APPLICATION DE LUBRIFIANT AINSI QUE DISPOSITIF POUR LA COMMANDE ET LA RÉGULATION AUTOMATISÉES D'UNE MACHINE POUR L'APPLICATION DE LUBRIFIANT

(30) Priorität: 26.10.2018 DE 102018126837
(43) Veröffentlichungstag der Anmeldung: 12.05.2021
(73) Patentinhaber: EMG Automation GmbH, 57482 Wenden (DE)
(72) Erfinder: BUBLITZ, Jens, 23684 Scharbeutz-Pönitz (DE); GEMMER, Timo, 58840 Plettenberg (DE)
(74) Vertreter: Patentanwälte Bauer Vorberg Kayser
(86) Internationale Anmeldenummer: PCT/EP2019/069434
(87) Internationale Veröffentlichungsnummer: WO 2020/083540

(56) Entgegenhaltungen:
- DE-A1- 10 055 723
- DE-A1- 19 847 258
- DE-A1-102016 102 931
- US-A- 4 892 133
- US-A1- 2014 033 979

## Beschreibung

Die vorliegende Erfindung betrifft ein Verfahren zur automatisierten Steuerungund Regelung einer Maschine zur ein- oder beidseitigen Schmiermittelaufbringung auf einem Substrat, insbesondere einem Metallblech, gemäß den Merkmalen des Patentanspruchs 1, sowie eine Einrichtung zur Steuerung- und Regelung einer Maschine zur Schmiermittelaufbringung gemäß den Merkmalen des Patentanspruchs 14.

Der Term "Substrat" kann im Sinne der Erfindung eine Vielzahl von Werkstücken, Maschinenteilen oder Bauteilen umfassen, auf die bzw. auf deren Oberfläche ein Schmiermittel aufgebracht werden soll. Insbesondere kann mit einem "Substrat" im Sinne der Erfindung ein flächenhaft ausgedehntes Flachprodukt gemeint sein, beispielsweise ein Metallblech.

Metallbleche können bei ihrer Verarbeitung, Bearbeitung, Lagerung oder beim Transport einer Reihe von mechanischen Belastungen oder äußeren Einflüssen (Temperaturschwankungen, Feuchtigkeit etc.) ausgesetzt sein. Um die Widerstandsfähigkeit von Metallblechen gegen derartige Belastungen bzw. Einflüsse zu erhöhen, können die Bleche mit flüssigen Korrosionsschutzölen (Prelubes) bzw. Schmierölen oder Trockenschmierstoffen (Hotmelts) beaufschlagt werden. Auch Trockenschmierstoffe können korrosionshemmende Eigenschaften aufweisen. Prelubes und Hotmelts können dahingehend differenziert werden, dass Prelube-Öle bei Raumtemperatur flüssig sind, während Hotmelts bei Raumtemperatur einen festen bzw. cremigen Zustand einnehmen. Die genannten Schmiermittel können neben bestimmten Spezialeigenschaften (z.B. Korrosionsschutz) auch weitere Eigenschaften aufweisen und darauf abgestimmte Additive enthalten. Sofern einer der vorgenannten Stoffe keine Schmierfunktion aufweist, so ist dieser trotzdem von der vorliegenden Erfindung umfasst. Der Term "Schmiermittel" ist im Rahmen des hiesigen Offenbarungsgehalts nicht auf jene der vorangehend genannten Stoffe beschränkt. So können beispielsweise auch Öle umfasst sein, die für den Einsatz in der Lebensmittel- oder Agrarindustrie geeignet sind. Beispielhaft seien Pflanzenöle und Fettsäureester genannt.

Korrosionsschutzöle werden insbesondere zum Korrosionsschutz von Metallblechen, beispielsweise Feinblechen, während ihrer Lagerung oder des Transports eingesetzt. Auch können derartige Öle die Metallbleche vor mechanischer Beschädigung (z.B. Kratzer) oder vor Reiboxidation schützen. Solche Öle können zudem die Umformung der Metallbleche im Presswerk unterstützen.

Häufig werden Metallbleche im Wege ihrer Fertigung einem Umform- oder Stanzprozess unterzogen. Dabei werden die Metallbleche, die u.a. auch in Form von Metallbändern vorliegen können, vor der Bearbeitung mit einem Schmiermittel beaufschlagt. Das aufgebrachte Schmiermittel vermindert die beim Umform- bzw. Stanzprozess entstehende Reibung. Beispielhaft sei auch auf die Möglichkeit von im Zuge der Verarbeitung auftretenden Zugbelastungen hingewiesen, die zu einem Reißen des Metallblechs führen können. Um dieses Risiko zu verringern, können die Bleche mit einem Schmiermittel beaufschlagt werden.

Die Schmiermittelaufbringung bzw. Beölung von Metallblechen wird über sogenannte Beölungsmaschinen vollzogen. Bekannt sind insbesondere Kontaktbeölungsmaschinen und kontaktlose Beölungsmaschinen. Während Kontaktbeölungsmaschinen das Schmiermittel bzw. Öl über Walzen, beispielsweise Bürstenoder Filzwalzen, auf das Metallblech einbringen, wird das Schmiermittel bei der kontaktlosen Schmiermittelaufbringung durch Aufsprühen auf das Metallblech aufgebracht.

Dazu weisen Beölungsmaschinen eine Applikationseinheit auf, die unter Einwirkung von Druckluft oder eines elektrischen Feldes einen Sprühnebel erzeugen. Dabei tritt das Schmiermittel durch Austrittsöffnungen der Applikationseinheit in Richtung des Substrats hindurch. Die Sprühnebelbeaufschlagung kann dabei in einer der Beölungsmaschine zugehörigen Sprühkammer erfolgen, in die das Metallblech eingeführt und nach der Beölung herausgeführt wird. Die Austrittsöffnungen können ober- und unterhalb des Metallblechs angeordnet sein. Zur Ausbildung einer homogenen Beölungsschicht kann den Austrittsöffnungen ein elektrisches Feld nachgelagert sein. Sodann stehen die den Sprühnebel ausbildenden Schmiermitteltröpfchen beim Besprühen unter Einwirkung eines elektrischen Feldes. Nebst den genannten, mit Sprühkammern versehenen Beölungsmaschinen, sind auch Sprühbalkensysteme bekannt. Sprühbalkensysteme werden insbesondere bei der elektrostatischen Beölung verwendet. Auch bekannt sind Systeme zur Durchführung einer Spot-Beölung, also einer partiellen Beaufschlagung eines Substrats mit einem Schmiermittel. Dabei kann eine Beölung durch Hindurchtreten des Schmiermittels durch eine einzige oder mehrere Austrittsöffnung(en) erfolgen. Auch bei dieser Variante ist eine Verteilung des Schmiermittels durch die Einwirkung von Druckluft oder die Anwendung eines elektrischen Feldes denkbar.

Bei der Aufbringung des Schmiermittels ist es von entscheidender Bedeutung die Qualität der Schmiermittelbeaufschlagung auf dem Substrat bzw. Metallblech zu überprüfen. Wesentlich für eine hinreichende Schmiermittelaufbringung ist eine homogene Verteilung des Schmiermittels auf dem Metallblech ohne trockene Bereiche. Wünschenswert ist also eine vollständige Schmiermittelaufbringung und die Vermeidung von nicht beaufschlagten (trockenen) Bereichen. Relevant sein kann zudem die Feststellung möglicher Vermischungen mit Fremdschmiermitteln. Ein Parameter aus dem Informationen über eine homogene Schmiermittelverteilung abgeleitet werden kann ist beispielsweise die Ölauflage, vorzugsweise angegeben in g/m². Weiterhin spielt auch die Schichtdicke des Ölfilms bzw. die Schichtdickenverteilung eine entscheidende Rolle. Denn eine inhomogene Schichtdickenverteilung kann ein Indiz für unerwünschte Schmiermittelbeulen auf dem Metallblech sein. Je nach Kundenanforderung, können die Parameter variieren.

Zur Erfassung der Ölauflage, der Schichtdicke bzw. Schichtdickenverteilung, der Schmiermittelreinheit und zur Homogenität eines auf ein Metallblech aufgebrachten Schmiermittels sind unterschiedliche Untersuchungsmethoden bekannt. Neben einer visuellen Inspektion durch das menschliche Auge, eignen sich dazu insbesondere spektroskopische und optische, insbesondere kamerabasierte, Analysemethoden. Als spektroskopische Methoden sind insbesondere die Fluoreszenzspektroskopie und die Infrarotspektroskopie von Relevanz. Fluoreszenzspektroskopische Messungen zeigen gegenüber der Infrarotspektroskopie Vorteile bei der Untersuchung Metallblechen, die mit Schmiermitteltröpfchen beaufschlagt sind. Eine Vorab-Homogenisierung des Öl-Films ist zur Untersuchung mittels Fluoreszenzspektroskopie nicht erforderlich. Die Bestimmung der Beölungsdicke mittels Fluoreszenzspektroskopie ist schon seit längerem bekannt, beispielsweise aus der EP 1 287 310 B1 und der DE 10 2015 007 054 A1. In letzterer Publikation ist zudem die Möglichkeit der Schichtdickenbestimmung im Zuge einer auf Infrarotspektroskopie basierenden Messung beschrieben.

Aus der DE 195 07 119 A1 ist ein laserinduziertes fluoreszenzspektroskopisches Messverfahren bekannt, mit dem Verunreinigungen in fluiden Systemen erfasst werden können. Die Verwendung der laserinduzierten Fluoreszenzspektroskopie ist auch bei der Untersuchung von mit Schmiermitteln beaufschlagten Metalloberflächen bereits im industriellen Einsatz.

Aus der DE 10 2008 050 598 A1 ist ein Verfahren zur Erkennung fehlerhafter Ölbeladungen von Stahlbändern (sog. Stahlcoils) bekannt. Die Erkennung beruht dem Prinzip der UV-Fluoreszenz. Nach dem Bestrahlen des beölten Stahlbandes wird der reflektierte Teil des UV-Lichtes gebündelt, vorzugsweise durch eine Sammellinse. Dessen Spektrum wird durch einen zusätzlichen Sensor aufgenommen. Eine Auswerteeinrichtung berechnet anhand der Sensordaten mögliche Prozessfehler, insbesondere über ein Spektrenverhältnis des ausgesendeten und reflektierten UV-Lichtes. Als Prozessfehler seien ölfreie, d.h. trockene und unbedeckte Bereiche, sowie der Eintrag von Fremdschmiermitteln genannt. Mit dem genannten Verfahren lassen sich zwar Ölbedeckungsfehler erkennen, nachteilig erscheint jedoch, dass mit dem genannten Verfahren keine automatisierte Kontrolle samt Anpassung von Prozessparametern in Folge einer beispielsweise fehlerhaften Ölbeladung ermöglicht ist. Für eine kontinuierliche Prozessführung bzw. vollautomatisierte Prozesssteuerung ist das genannte Verfahren weniger geeignet.

Bei dem aus der DE 198 47 258 A1 bekannten Verfahren wird zwar nicht unmittelbar die auf einem Metallblech aufgebrachte Ölschicht, sondern der aus den Düsen einer Beölungsmaschine austretende Sprühnebel sensiert (eine CCD-Kamera detektiert die Reflexionsspur eines durch den Sprühnebel hindurchtretenden Laserstrahls). Gleichwohl wird in Konsequenz der Messresultate eine Gut/Schlecht Entscheidung bezüglich des Beschichtungsprozesses getroffen. In Abhängigkeit dessen, können Regelgrößen wie die Temperatur, Spannung oder die Volumenstrommenge abgeändert bzw. nachgeregelt werden. Hierbei kann es von Nachteil sein, dass nicht die unmittelbar vorliegende Ölbedeckung des Metallblechs bestimmt wird, sondern es sich bei der Untersuchung des Sprühnebels um eine indirekte, d.h. mittelbare Messung handelt. Inhomogenitäten die auf Materialunebenheiten des Metallblechs beruhen können mit dieser Methode nicht bzw. nur unzureichend erfasst werden.

Die WO 00/22421 A1 offenbart ein fluoreszenzbasiertes Verfahren zur Bestimmung der Ölsorte bzw. Ölbeladung auf Oberflächen vor deren Reinigung. Die dabei durchgeführten Messschritte laufen automatisiert ab. Ferner kann in Reaktion auf die Messergebnisse automatisch ein Warnsignal erzeugt werden bzw. eine Parameterüberprüfung eingeleitet werden (z.B. die Überprüfung der Zusammensetzung der verwendeten Reinigerlösung vor dem eigentlichen Messverfahren). Eine vollautomatisierte Steuerung- und Regelung des Untersuchungssystems ist jedoch nicht offenbart.

Verfahren zur Schmiermittelbeaufschlagung bzw. zur Untersuchung und Steuerung der Schmiermittelbeaufschlagung kommen auch bei anderen Werkstücken als Metallblechen zum Einsatz. So offenbart die DE 600 26 599 T2 ein Schmiermittelsteuersystem für ein System von Maschinenkomponenten. Das dortige System umfasst unter anderem eine Schmierfilmdicken-Messeinrichtung und einer Steuereinrichtung. Die Messeinrichtung kann auf einem Fluoreszenzmessverfahren basieren. In Abhängigkeit der Messresultate ist die Schmiermittelzufuhr einstellbar.

Keine der vorangehend genannten Offenbarung ist auf eine vollständig automatisierte Steuer- und Regelung einer Beölungsmaschine gerichtet, die zum einen die lokale Schmiermittelsituation auf dem mit Schmiermittel beaufschlagten Metallblech und zum anderen Betriebsparameter der Maschine berücksichtigt.

Entsprechend liegt der vorliegenden Erfindung die **Aufgabe** zugrunde ein Verfahren zur Steuerung- und Regelung einer Maschine zur Schmiermittelaufbringung auf einem Metallblech bereitzustellen, vermöge dessen ein vollautomatisierter und kontinuierlicher Verfahrensablauf unter Berücksichtigung der Verfahrensqualität und gegebenenfalls unter Anpassung von Steuerungs- und Regelungsparametern ermöglicht wird.

**Gelöst** wird die Aufgabe mit den Merkmalen der unabhängigen Patentansprüche 1 und 14.

Wie schon eingangs erwähnt, betrifft die Erfindung ein Verfahren zur automatisierten Steuerung- und Regelung einer Maschine zur ein- oder beidseitigen Schmiermittelaufbringung auf einem Substrat, insbesondere einem Metallblech. Die Maschine umfasst zumindest eine Applikationseinheit, zumindest eine mit der zumindest einen Applikationseinheit über zumindest eine Transportleitung verbundene Pumpeneinheit, zumindest eine Sensiereinheit zur Durchführung eines räumlich aufgelösten optischen oder spektroskopischen Messverfahrens, eine Steuer- und Regelungseinheit, sowie eine Datenverarbeitungseinheit. Das erfindungsgemäße Verfahren umfasst die folgenden Schritte:
a. unter Einsatz der zumindest einen Pumpeneinheit: Befördern des Schmiermittels in Richtung der zumindest einen Applikationseinheit über die zumindest eine Transportleitung;
b. Messen von zumindest einem ersten Analyseparameter mit zumindest einer der zumindest einen Pumpeneinheit zugeordneten Messeinheit oder Bestimmen von zumindest einem ersten Analyseparameter aus Maschinenparametern;
c. unter Einsatz der zumindest einen Applikationseinheit: Aufbringen des Schmiermittels auf zumindest einer Seite des Substrats bzw. Metallblechs;
d. Messen von zumindest einem zweiten Analyseparameter mit der Sensiereinheit;
e. unter Einsatz der Datenverarbeitungseinheit: Berechnen von zumindest einem ersten Güteparameter aus dem zumindest einen ersten Analyseparameter und dem zumindest einen zweiten Analyseparameter;
f. unter Einsatz der Datenverarbeitungseinheit: Abgleichen des zumindest einen Güteparameter mit zumindest einem ersten Vorgabeparameter, wobei in Folge des Abgleichs eine Positiv- oder Negativfeststellung getroffen wird;
g. im Falle einer Negativfeststellung: automatisches Überprüfen und/oder Ändern von zumindest einem Stellparameter über die Steuer- und Regelungseinheit; und im Falle einer Positivfeststellung: Durchführen einer Kontrollschleife und/oder Freigeben des Substrats bzw. Metallblechs.

Ferner betrifft die Erfindung eine Einrichtung zur automatisierten Steuerung- und Regelung einer Maschine zur ein- oder beidseitigen Schmiermittelaufbringung auf einem Substrat, insbesondere einem Metallblech. Dabei umfasst die Maschine:
a. zumindest eine Applikationseinheit zum Aufbringen des Schmiermittels auf zumindest einer Seite des Substrats bzw. Metallblechs,
b. zumindest eine mit der zumindest einen Applikationseinheit über zumindest eine Transportleitung verbundene Pumpeneinheit zum Befördern des Schmiermittels in Richtung der zumindest einen Applikationseinheit über die zumindest eine Transportleitung,
c. zumindest eine der Pumpeneinheit zugeordnete Messeinheit zum Messen von zumindest einem ersten Analyseparameter oder eine Einheit zum Bestimmen von zumindest einem ersten Analyseparameter aus Maschinenparametern,
d. zumindest eine Sensiereinheit zur Durchführung eines räumlich aufgelösten optischen oder spektroskopischen Messverfahrensund zum Messen von zumindest einem zweiten Analyseparameter,
e. eine Datenverarbeitungseinheit, die dazu eingerichtet ist,
   i. zumindest einen ersten Güteparameter aus dem zumindest einen ersten und zweiten Analyseparameter zu berechnen,
   ii. den zumindest einen Güteparameter mit zumindest einem ersten Vorgabeparameter abzugleichen, und
   iii. eine Positiv- oder Negativfeststellung in Folge des Abgleichs zu treffen,
   sowie
f. eine Steuer- und Regelungseinheit, die dazu eingerichtet ist, im Falle
   i. einer Negativfeststellung durch die Datenverarbeitungseinheit zumindest einen Stellparameter automatisch zu überprüfen und/oder zu ändern, und
   ii. einer Positivfeststellung eine Kontrollschleife zu durchlaufen oder/und das Substrat bzw. Metallblech für eine Weiterverarbeitung freizugeben.

Mit dem der Erfindung zugrunde liegenden Verfahren bzw. der Einrichtung zur automatisierten Steuerung- und Regelung einer Maschine zur Schmiermittelaufbringung wird die aktuelle und lokale Schmiermittelsituation auf dem Metallblech unmittelbar nach dem Aufbringen des Schmiermittels auf das Substrat bzw. Metallblech berücksichtigt. Insbesondere eignen sich flächenhaft ausgedehnte Flachprodukte zur Verwendung als Substrate im Sinne der Erfindung. In der Praxis kommt es häufig vor, dass Beölungsmaschinen einem Wechsel der Schmiermittelsorte unterzogen werden, beispielsweise wenn Metallbleche für einen neuen Kunden produziert werden. Aufgrund von Rückständen des vormals verwendeten Schmiermittels kann es zu einer ungewünschten Aufbringung von miteinander vermischten Schmiermitteln kommen. Das erfindungsgemäße Verfahren bzw. die erfindungsgemäße Einrichtung ermöglichen das Vorliegen vermischter Schmiermittel auf dem Substrat zu erkennen, und in dessen Abhängigkeit die Maschine zu steuern und zu regeln.

Mit dem der vorliegenden Erfindung zugrunde liegenden Verfahren lassen sich Hinweise für das Vorliegen vermischter Schmiermittel auf dem Substrat bzw. Metallblech ermitteln. Beispielsweise kann mit dem hier beschriebenen Verfahren bzw. der Einrichtung erfasst werden, ob die Menge der Schmiermittelvermischung oberoder unterhalb eines noch akzeptablen Grenzwertes liegt. Zudem kann die Schmiermittelvermischung räumlich erfassbar sein. Beispielsweise kann festgestellt werden, ob das Metallband auf den ersten Metern mit vermischten Schmiermitteln beaufschlagt ist oder nicht. In Folge dieser Feststellungen werden in einem geschlossenen Steuer- und Regelungskreislauf Verfahrensfeststellungen getroffen, die beispielsweise mit einer Überprüfung oder Änderung von Betriebsparametern und Messparametern einhergehen können. Auch kann automatisiert festgestellt werden, ob die Schmiermittelaufbringung fortgesetzt, unterbrochen oder abgebrochen wird. In Folge einer solchen Feststellung kann das Metallblech zum Weitertransport oder zur Weiterverarbeitung freigegeben werden. Alternativ kann es aus Ausschuss deklariert oder nachbearbeitet werden. Gleiches gilt für die Erfassung von trockenen, d.h. nicht mit Schmiermittel beaufschlagten Stellen des Substrats bzw. des Metallblechs. Auch solche "trockenen" Stellen können mit dem erfindungsgemäßen Verfahren bzw. unter Einsatz der erfindungsgemäßen Einrichtung erfasst werden, beispielsweise auch in räumlicher Auflösung. In Folge einer solchen Feststellung können in einem geschlossenen Steuer- und Regelungskreislauf Verfahrensfeststellungen getroffen werden, die mit einer automatischen Überprüfung oder Änderung von Betriebsparametern und Messparametern einhergehen können.

Die auf dem Substrat bzw. Metallblech vorliegende Schmiermittelsituation, insbesondere die Schmiermittelvermischung oder die Erfassung trockener Stellen, wird durch eine oder mehrere Sensiereinheiten erfasst. Mit den Sensiereinheiten wird ein räumlich aufgelöstes optisches oder spektroskopisches Messverfahren durchgeführt. Die räumliche Auflösung kann dabei durch Verfahren der Sensiereinheit(en) relativ zur Substratoberfläche erfolgen, wobei an einer Mehrzahl von Positionen Messungen durchgeführt werden. Weiterhin kann eine räumlich aufgelöste Messung durchgeführt werden, indem die Sensiereinheit(en) ortsfest angeordnet werden und die Messmethode an sich zur räumlichen Auflösung geeignet ist, ähnlich einem bildgebenden Messverfahren mit ortsfestem Sensor. Als optisches oder spektroskopisches Verfahren kommt beispielsweise die Fluoreszenzspektroskopie oder die Infrarotspektroskopie in Betracht. Diese Verfahren können mit Rückstreumethoden kombiniert werden. Auch die Ellipsometrie kommt als Messverfahren in Betracht. Auch kamerabasierte Messverfahren können im Rahmen der Erfindung zum Einsatz kommen. Ein besonders vorteilhaftes Messverfahren im Rahmen der vorliegenden Erfindung ist jedoch die laserinduzierte Fluoreszenzspektroskopie.

Im Rahmen der Erfindung werden optische oder spektroskopische Messungen, insbesondere laserinduzierte fluoreszenzspektroskopische Messungen auf der Substratoberfläche bzw. Metalloberfläche durchgeführt, die die lokale Schmiermittelsituation wiederspiegeln. Aus den Messergebnissen können im Wege der Datenverarbeitung Analyseparameter extrahiert werden, die fortan als zweite Analyseparameter bezeichnet werden. Die zweiten Analyseparameter geben die Schmiermittellage nach dem Auftragen des Schmiermittels auf dem Metallblech wieder. Folgende zweite Analyseparameter können dabei basierend auf den Messergebnissen der zumindest einen Sensiereinheit ermittelt werden: absolute Schmiermittelbedeckung, räumlich gemittelte Schmiermittelbedeckung, räumlich aufgelöste Schmiermittelverteilung, mittlere Schichtdicke des aufgebrachten Schmiermittels, räumlich aufgelöste Schichtdickenverteilung des Schmiermittels, oder einen dazu proportionalen Parameter. Diese Liste ist nicht abschließend. Die Werte können mathematisch, empirisch, unter Anwendung eines Auswertealgorithmus oder mit Hilfe eines Auswertungsprogramms ermittelt werden.

Ein besonderer Vorteil der Erfindung ergibt sich daraus, dass nicht nur die lokale Schmiermittelsituation auf dem Substrat bzw. Metallblech bei der Steuerung- und Regelung der Maschine berücksichtigt wird, sondern auch interne Kennparameter bzw. Betriebsparameter der Maschine.

Beispielsweise weist die Maschine zumindest eine Pumpeneinheit auf, die über zumindest eine Transportleitung mit zumindest einer Applikationseinheit verbunden ist. Der Pumpeneinheit kann zumindest eine Messeinheit zugeordnet sein, die unmittelbar an der Pumpeneinheit oder alternativ im Bereich der Transportleitung angeordnet sein kann. Gleichsam können auch mehrere zusammenwirkende Sensoren die Messeinheit ausbilden. Die einzelnen Sensoren können an unterschiedlichen Positionen der zumindest einen Pumpeneinheit oder der zumindest einen Transportleitung vorgesehen sein.

Mit der zumindest einen Messeinheit können erste Analyseparameter ermittelt werden, die den Fluss des Schmiermittels in Richtung der Applikationseinheit kennzeichnen. Alternativ können die ersten Analyseparameter aus Maschinenparametern bestimmt werden, beispielsweise einer eingestellten Drehzahl der Pumpeneinheit. Die Maschinenparameter können über gesonderte Einheit ermittelt werden, aber auch über die Steuer- und Regelungseinheit oder die Datenverarbeitungseinheit. Beispielsweise können die Maschinenparameter bei Eingabe durch einen Benutzer unmittelbar in entsprechende zweite Analyseparameter umgerechnet werden. Auch können in verschiedenen Maschinenbestandteilen jeweils Einheiten oder Mikrocontroller vorgesehen sein, die die Maschinenparameter ermitteln und in erste Analyseparameter umrechnen. Diese können dann an die Datenverarbeitungseinheit weitergegeben werden. Auch können die ersten Analyseparameter unmittelbar von der Datenverarbeitungseinheit aus den Maschinenparametern berechnet werden. Bei den ersten Analyseparametern kann es sich um folgende Parameter handeln: absolute Durchflussmenge des Schmiermittels, zeitlich oder räumlich gemittelte Durchflussmenge des Schmiermittels, Volumenstrom des Schmiermittels, Flussgeschwindigkeit des Schmiermittels, Viskosität des Schmiermittels, Pumpendruck, Pumprate, oder einem dazu proportionalen Parameter.

Ein Charakteristikum der zweiten Analyseparameter ist, dass diese einerseits zur Kontrolle der Verfahrensperformance gemessen werden und andererseits zumindest teilweise durch die Steuer- und Regelungseinheit regelbar, d.h. anpassbar, sind. Die zweiten Analyseparameter hingegen sind nicht unmittelbar über die Steuer- und Regelungseinheit regelbar, da sie die lokale Schmiermittelsituation auf dem Substrat bzw. Metallblech wiedergeben. Diese Kennziffern sind nur indirekt beeinflussbar.

Die Berücksichtigung der lokalen Schmiermittelsituation auf dem Substrat bzw. Metallblech einerseits und interner Maschinenparameter andererseits, findet darin Ausdruck, dass unter Einsatz einer Datenverarbeitungseinheit zumindest ein Güteparameter aus dem zumindest einen ersten und zweiten Analyseparameter berechnet wird. Der Güteparameter berücksichtigt demnach sowohl die lokale Schmiermittelsituation als auch Messwerte oder Maschinenparameter der Pumpeneinheit und liefert somit eine zuverlässige Grundlage für die Bewertung der Verfahrensqualität und letztlich der Qualität des Schmiermittelauftrags auf dem Substrat bzw. Metallblech. Häufig kann ein unzureichender Schmiermittelauftrag aus lokalen Inhomogenitäten des Substrats bzw. Metallblechs oder einer unzureichenden Anpassung bestimmter Steuer- oder Regelungsparameter der Maschine an die Anforderungen des Schmiermittelauftrags auf das jeweilige Substrat bzw. Metallblech resultieren. Dieser Tatsache wird durch die Berücksichtigung der ersten und zweiten Analyseparameter bei der Berechnung des Güteparameters Rechnung getragen.

Der so berechnete zumindest eine Güteparameter wird mit zumindest einem ersten Vorgabeparameter abgeglichen. Bei dem Vorgabeparameter kann es sich um einen Absolutwert handeln. Auch kann der Vorgabeparameter Grenzbereiche bzw. Toleranzbereiche aufweisen, in welchen sich der Güteparameter bewegen darf, der Vorgabeparameter kann also einen Wertebereich umfassen. Weicht der ermittelte Güteparameter von dem Vorgabeparameter ab - die Abweichung kann aus einer Abweichung des Güteparameters von einem Absolutwert oder aus einem Herausfallen des Güteparameters aus einem Wertebereich resultieren - so wird in Folge des Abgleichs eine Negativfeststellung getroffen. In Konsequenz der Negativfeststellung können ein oder mehrere Stellparameter der Maschine über die Steuerund Regelungseinheit überprüft und/oder abgeändert werden. Die Überprüfung erfolgt vorzugsweise automatisiert, kann aber auch halbautomatisiert oder manuell erfolgen. Im Rahmen der Überprüfung können beispielsweise die folgenden Stellparameter überprüft und mit Sollwerten abgeglichen werden: Spaltbreite der Austrittsöffnung, Stärke oder Ausrichtung des elektrischen Feldes, Einschaltdauer des elektrischen Feldes, absolute Durchflussmenge des Schmiermittels, zeitlich oder räumlich gemittelte Durchflussmenge des Schmiermittels, Volumenstrom des Schmiermittels, Flussgeschwindigkeit des Schmiermittels, Pumpendruck, Pumprate, Aufbringungstemperatur des Schmiermittels.

Beachtet sei, dass einige der hier aufgeführten Stellparameter gleichzeitig auch erste Analyseparameter darstellen können. Diese Parameter sind also gleichzeitig durch die Steuer- und Regelungseinheit änderbar und über die der Pumpeneinheit zugeordnete Messeinheit messbar. Im Wege der Überprüfung können auch interne Systemfehler der Maschine erfasst werden. Bei Vorliegen eines Systemfehlers kann eine manuelle Überprüfung der Maschine erforderlich sein. Auch kann Funktionalität der Maschine bei Vorliegen eines Systemfehlers mit einer Überprüfungsroutine erfolgen. Liegt kein Systemfehler vor, so wird dies signaltechnisch an die Steuer- und Regelungseinheit weitergegeben und die Schmiermittelbeaufschlagung fortgesetzt bzw. eine Positivfeststellung getroffen.

Nach der Überprüfung kann - je nach Ergebnis der Überprüfung - die Schmiermittelaufbringung ohne Parameteränderung an einem weiteren Substrat bzw. Metallblech fortgesetzt werden. Wird die Schmiermittelaufbringung an einem Metallband durchgeführt, welches nach der Schmiermittelaufbringung zu einem Coil aufgewickelt wird, so können die Stellen unzureichender Schmiermittelaufbringung markiert oder als Verschnitt deklariert werden. Auch kann das gesamte Metallband als Verschnitt deklariert werden. Im Falle einer abschnittsweisen Markierung einer unzureichenden Schmiermittelaufbringung kann die Schmiermittelaufbringung manuell oder automatisiert an dieser Stelle wiederholt werden.

Auch ist es im Rahmen des erfindungsgemäßen Verfahrens möglich den Aufbringungsprozess zu unterbrechen, um bestimmte Stellparameter automatisiert oder manuell abzuändern. Die Parameteränderung kann mit einem Algorithmus ausgeführt und gegebenenfalls wiederholt werden. In Folge der Abänderung kann die Schmiermittelaufbringung an demselben Substrat bzw. Metallblech wiederholt werden (gegebenenfalls unter vorheriger Reinigung), oder an einem neuen der Maschine zugeführten Substrat bzw. Metallblech durchgeführt werden.

Beim Treffen einer Positivfeststellung entspricht der berechnete Güteparameter dem Vorgabeparameter bzw. fällt in einen den Vorgabeparameter definierenden Wertebereich. Um die Zuverlässigkeit und Genauigkeit bei der Bewertung der Verfahrensqualität weiter zu verbessern, kann selbst bei einer initialen Positivfeststellung eine weitere Kontrollschleife durchlaufen werden. Jedoch kann das Verfahren auch ohne den Durchlauf der Kontrollschleife ausgestaltet werden. Im letzteren Fall wird das Substrat bzw. Metallblech nach der Positivfeststellung freigegeben und kann entlang einer Transportrichtung weiterbefördert werden. Sofern der Durchlauf einer Kontrollschleife vorgesehen ist, wird ein weiterer erster und/oder zweiter Analyseparameter mit einem zweiten Vorgabeparameter abgeglichen. Vorzugsweise wird dabei die über das optische oder spektroskopische Messverfahren - beispielsweise laserinduzierte Fluoreszenzspektroskopie - ermittelte räumlich aufgelöste Schmiermittelverteilung mit einem zweiten Vorgabeparameter abgeglichen. Auch die räumlich aufgelöste Schmiermittelverteilung unterschiedlicher Schmiermittel kann mit einem zweiten Vorgabeparameter abgeglichen werden. Auch der zweite Vorgabeparameter kann einen Absolutwert oder einen Wertebereich umfassen. Alternativ kann der zweite Vorgabeparameter eine oder mehrere Datenkurven umfassen, beispielsweise die Schmiermittelverteilung als Funktion des Ortes, wobei der Ort in diesem Fall eine sich entlang des Substrats bzw. Metallblechs oder quer zum Substrat bzw. Metallblech erstreckende Ortsachse umfasst.

Nach Durchlaufen der Kontrollschleife wird eine weitere Negativ- oder Positivfeststellung getroffen. Bei Vorliegen einer Positivfeststellung wird das Metallblech freigegeben. Liegt eine Negativfeststellung vor, so wird das Substrat bzw. Metallblech entweder als Ausschuss deklariert und nicht zur Weiterbearbeitung bzw. zum Weitertransport freigegeben oder es findet eine Reinigung des Substrats bzw. Metallblechs mit anschließender erneuter Zuführung in die Maschine zur Schmiermittelaufbringung statt.

Steuer- und Regelungstechnisch handelt es sich also bei dem erfindungsgemäßen Verfahren um einen geschlossenen Kreislauf (closed-loop). Je nachdem, ob im Verfahrensschritt f gemäß Patentanspruch 1 eine Positiv- oder Negativfeststellung getroffen wird, durchläuft das Verfahren automatisiert eine Kontrollschleife, überprüft interne Maschinenparameter und/oder Stellparameter und ändert diese gegebenenfalls vor der Durchführung eines erneuten Verfahrenszyklus ab. Das Verfahren ist also geeignet die Maschine automatisiert zu steuern und zu regeln, und berücksichtigt dabei die aktuelle Verfahrensperfomance mit Blick auf die Schmiermittelaufbringung (z.B. die Sortenreinheit des aufgebrachten Schmiermittels) und Maschinenparameter.

Bei der der Pumpeneinheit zugeordneten Messeinheit kann es sich beispielsweise um einen Durchflusssensor handeln. In Betracht kommen dazu insbesondere unmittelbare Volumenzähler (z. B. Trommelmesser, Ovalradzähler, Kolbenzähler), mittelbare Volumenzähler (z. B. Woltmannzähler), Schwebekörper-Durchflussmesser, magnetisch-induktive Durchflussmesser, induktive Durchflussmesser, Ultraschalldurchflusssensoren, Coriolis-Massendurchflussmesser, Wirbeldurchflussmesser, Korrelationsdurchflussmesser, Laminardurchflussmesser, Strömungssonden, thermische Massendurchflussmesser, Laser-Doppler sowie spektroskopische Systeme. Als spektroskopische Messmethode kommen beispielsweise Kernmagnetresonanz-basierte Flussmessungen in Betracht. Auch Druckmesser können die Messeinheit ausbilden.

Wie bereits erwähnt werden zweiten Analyseparameter über zumindest eine Sensiereinheit ermittelt. Die zumindest eine Sensiereinheit ist zur Durchführung eines optischen oder spektroskopischen Messverfahrens geeignet, beispielsweise zur Durchführung von räumlich aufgelöster, laserinduzierter Fluoreszenzspektroskopie. Die Sensiereinheit kann in die Maschine integriert sein. Vorzugsweise sind mehrere Sensiereinheiten in die Maschine integriert, wobei die Sensiereinheiten in vorteilhafter Weise oberhalb- und/oder unterhalb des Metallblechs vorgesehen sind. Bei Verwendung des auf laserinduzierter Fluoreszenzspektroskopie basierenden Messverfahrens ist zumindest eine Sensiereinheit mit einem Festkörperlaser ausgestattet, vermöge dessen bis zu 10 000 Laserpulse pro Sekunde erzeugt werden können. Die Verwendung von derartig kurzen Pulsen bzw. einer derartigen Pulsfrequenz ist vorteilhaft, da sich dadurch im Vergleich zur Verwendung von längeren Pulsen bei einem mit konstanter Bandgeschwindigkeit bewegendem Band eine höhere räumliche Auflösung ergibt.

Über ein Quarzfaserbündel wird die Energie der Laserpulse in Richtung des Messorts, also in Richtung der Substratoberfläche bzw. Metalloberfläche übertragen. Über einen Fotomultiplier und ein zweites Quarzfaserbündel werden einzelne Photonen des von der mit Schmiermittel versehenen Substratoberfläche bzw. Metalloberfläche ausgehenden Fluoreszenzsignals detektiert. Die Probenköpfe der Sensiereinheit werden nach der Messung oder in definierten Zeitintervallen mit Druckluft gespült. Denn durch die Anordnung der Sensiereinheit unmittelbar an der Maschine können die Quarzfaserbündel bzw. Probenköpfe durch aus der Sprühnebelkammer heraustretenden Sprühnebel verunreinigt werden. Nach dem Spülen können Referenzmessungen an Kalibrierproben durchgeführt werden. Für die Durchführung der laserinduzierten Fluoreszenzmessungen muss die Sensiereinheit einen möglichst konstanten Arbeitsabstand zur Substratoberfläche bzw. Metalloberfläche einhalten. Ausreichend hat sich hierbei ein Tolerenzbereich von ± 20 mm erwiesen.

Weiterhin kann die Sensiereinheit ein Zählsystem umfassen, welches die Einzelphotonenzeit im Nanosekundenbereich erfasst. Die so erfassten Daten können unter Einsatz der Datenverarbeitungseinheit ausgewertet werden. Dazu ist die Datenverarbeitungseinheit signaltechnisch mit der Sensiereinheit verbunden. Auch kann die Sensiereinheit einen Mikrocontroller umfassen, vermöge dessen eine Vorauswertung der erfassten Messwerte erfolgt. Ein quantitativ mit der laserinduzierten Fluoreszenzspektroskopie ermittelbarer Parameter ist beispielsweise das Flächengewicht der Schmiermittelauflage in g/m². Laserinduzierte Fluoreszenzspektroskopische Messungen sind abhängig von der Schmiermittelsorte. Dies ist eine wesentliche Eigenschaft um Schmiermittelvermischungen bzw. das Vorliegen mehrerer Schmiermittel auf dem Substrat bzw. Metallblech festzustellen und dies räumlich aufzulösen. Auch andere optische oder spektroskopische Messverfahren können zur Bestimmung des Flächengewichts der Schmiermittelauflage geeignet sein und Hinweise auf das Vorliegen mehrerer Schmiermittel auf dem Substrat bzw. dem Metallblech liefern.

Auch die räumliche Auflösung diverser Messparameter, beispielsweise der Schmiermittelauflage über das Substrat bzw. Metallblech, ist mit Hilfe der Sensiereinheit erfassbar. Dazu ist die Sensiereinheit an einer Traversiereinheit angeordnet, die sich quer zur Transportrichtung des Metallblechs über das Metallblech hinweg erstreckt. Die Sensiereinheit wird entlang der Traversiereinheit in unterschiedliche Messpositionen verfahren und nimmt an verschiedenen Stellen Messsignale auf. Die räumlich aufgelösten Messsignale werden an die Datenverarbeitungseinheit weitergeleitet.

Weitere Vorteile der Erfindung ergeben sich aus den Unteransprüchen, deren Merkmale im Folgenden näher erläutert werden.

Nach einer vorteilhaften Ausgestaltung der Erfindung ist die Maschine in eine Produktions- und/oder Transportlinie für Substrate bzw. Metallbleche integriert, beispielsweise in einem Walz- oder Presswerk. Durch die Integration der Maschine in eine Produktions- oder Transportlinie für Substrate bzw. Metallbleche müssen diese zur Aufbringung des Schmiermittels nicht aus der Produktions- oder Transportlinie entfernt werden. Der Prozess kann also kontinuierlich erfolgen. Insbesondere bei langen Metallbändern ist dies von Vorteil. Durch eine derartige integrierte Ausbildung können Verfahrens- bzw. Produktionskosten gespart werden. Zudem kann die Qualität der Schmiermittelaufbringung somit in unmittelbarem Anschluss an die Aufbringung auf das Substrat bzw. Metallblech erfolgen, eine Beeinflussung der Messergebnisse durch ein Zerfließen des Schmiermittels beim Transport zu einer Sensiereinheit wird dabei vermieden.

Nach einer weiteren Ausgestaltung der Erfindung weist die Applikationseinheit ein unteres Applikationsmodul und/oder ein oberes Applikationsmodul auf, wobei ein jedes Applikationsmodul zumindest eine Austrittsöffnung aufweist, durch die das Schmiermittel in Richtung des Substrats bzw. des Metallblechs hindurchtritt. Die Entscheidung von welcher Seite das Schmiermittel auf das Substrat bzw. Metallblech aufgebracht wird, erfolgt je nach Kundenanforderung. Für Metallbänder kann eine beidseitige Aufbringung des Schmiermittels von Vorteil sein, da das Metallblech beim Aufwickeln als Metallcoil beidseitig mit weiteren Oberflächen des Metallbandes in Kontakt steht. Somit können beidseitig mechanisch induzierte Beschädigungen an dem Metallblech (z. B. in Folge von Reibungskräften) reduziert werden. Wird das Schmiermittel ober- und unterseitig auf das Substrat bzw. Metallblech aufgebracht, so ist die Maschine mit zumindest einem oberseitig des Substrats bzw. Metallblechs angeordneten Applikationsmodul sowie zumindest einem unterseitig des Substrats bzw. Metallblechs angeordneten Applikationsmodul versehen. Das Substrat bzw. Metallblech kann also beim Aufbringen des Schmiermittels zwischen dem unteren und oberen Applikationsmodul angeordnet werden.

Die Art der Applikationseinheit kann grundsätzlich in verschiedene Applikationsarten unterteilt werden. Eine solche Unterteilung kann in eine pneumatische Applikation, d.h. einem Besprühen des Substrats mit Schmiermittel unter der Einwirkung von Druckluft, und in eine elektrostatische Applikation unterteilt werden. Bei einer elektrostatischen Schmiermittelaufbringung wird das Schmiermittel vor, während oder nach dem Durchtritt durch eine Austrittsöffnung mit einem elektrischen Feld beaufschlagt. Die Tröpfchenbildung des Schmiermittels erfolgt also - je nach Applikationsart - entweder durch die Einwirkung der Druckluft in Verbindung mit einer entsprechenden Einstellung der Spaltbreite der Austrittsöffnung oder durch die Einwirkung eines elektrischen Feldes.

Zur Applikation des Schmiermittels kann die Maschine eine Sprühkammer aufweisen, in welche die Applikationseinheit integriert ist. Die einzelnen Applikationsmodule können Sprühbalken sein, in welchen zumindest eine Austrittsöffnung für das Schmiermittel vorgesehen ist. Die Sprühbalken können in eine Sprühkammer integriert sein. Ferner können solche Sprühbalken auch ohne eine Sprühkammer ausgestaltet sein. Bei einer elektrostatischen Beölung wird das Schmiermittel nicht mit Druckluft beschickt, sondern mit einem elektrischen Feld beaufschlagt. Bei einer auf Druckluft basierten Beölung wird das Schmiermittel unter Druckluft durch die jeweiligen Austrittsöffnungen befördert. Prinzipiell ist es denkbar beide Methoden (elektrostatische Beölung, pneumatische Beölung) in einer Sprühkammer oder ohne Sprühkammer durchzuführen. Weiterhin kann für beide Methoden ein entsprechender Sprühbalken vorgesehen sein.

Auch kann die Applikationseinheit zur Durchführung einer Spot-Beölung ausgebildet sein. Dazu kann ein der Applikationseinheit zugehöriges Applikationsmodul nur eine einzige Austrittsöffnung aufweisen, vermöge dessen eine Spot-Beölung durchführbar ist. Aber auch mit mehreren in einem Applikationsmodul vorgesehenen Austrittsöffnungen lassen sich Spot-Beölungen durchführen. Mit dem erfindungsgemäßen Verfahren lassen sich einzelne Austrittsöffnungen steuern und die Steuerparameter können in Bezug auf einzelne Austrittsöffnungen angepasst werden.

Nach einer vorteilhaften Ausgestaltung kann das Applikationsmodul ein Düsensystem sein, in welchem zumindest eine Austrittsöffnung für das Schmiermittel in Form einer Düse vorgesehen ist. Das Düsensystem kann je nach Art der Schmiermittelaufbringung einer Drucklufteinspeisung oder einem äußeren elektrischen Feld kombiniert sein.

Vorteilhaft kann es ferner sein, dass das Schmiermittel in Form eines Sprühnebels auf das Substrat bzw. Metallblech aufgebracht wird, sei es im Wege einer elektrostatischen oder pneumatischen Schmiermittelaufbringung.

Das Substrat bzw. Metallblech wird zur Beaufschlagung mit dem Schmiermittel an zumindest einem Applikationsmodul der Applikationseinheit vorbeigeführt, unabhängig davon ob es sich um eine elektrostatische oder pneumatische Beölung handelt.

Bei einer elektrostatischen Schmiermittelaufbringung werden die Schmiermitteltröpfchen beim Heraustreten aus den Austrittsöffnungen aufgeladen und in Richtung der Substratoberfläche bzw. Metalloberfläche beschleunigt. Das elektrische Feld kann variabel einstellbar sein, beispielsweise mit Blick auf seine Ausrichtung, Stärke oder Laufzeit.

Gemäß einer weiteren Ausgestaltung der Erfindung kann die Temperatur des Schmiermittels vor dem Aufbringen kaskadenartig bis zu einer Aufbringungstemperatur erhöht werden. Auch eine lineare Temperaturerhöhung oder eine einmalige Temperaturerhöhung des Schmiermittels vor Zuführung in das Leitungssystem ist denkbar. Eine solche Temperaturerhöhung kann dahingehend vorteilhaft sein, dass im Wege der Temperaturerhöhung die Fließfähigkeit des Schmiermittels erhöht wird. Eine erhöhte Fließfähigkeit kann den Transport des Schmiermittels ausgehend von einem Vorratsbehältnis über ein mit einer Pumpe verbundenes Leitungssystem bis zur zumindest einen Applikationseinheit erleichtern. Mit der Temperaturerhöhung kann sich die dynamische Viskosität des Schmiermittels gemäß der Arrhenius-Andrade Beziehung verringern. Die erhöhte Temperatur des Schmiermittels kann zudem die feine Verteilung des Sprühmittels über die Applikationseinheit bzw. die Applikationsmodule samt Austrittsöffnungen erleichtern.

Nach einer weiteren Ausgestaltung der Erfindung können ober- und/oder unterseitig des Substrats bzw. Metallblechs mehrere Austrittsöffnungen oder Düsen vorgesehen sein, sodass eine vollständige Sprühbeaufschlagung des Metallblechs über dessen gesamte Breite ermöglicht wird. Die Anzahl der vorgesehenen Austrittsöffnungen oder Düsen kann je nach Größe ihres Sprühbereichs variieren. Werden Austrittsöffnungen oder Düsen mit einem geringen Sprühbereich verwendet - der Sprühbereich definiert die Größe des von einer einzelnen Austrittsöffnung oder Düse mit Schmiermittel beaufschlagbaren Bereichs des Substrats bzw. Metallblechs - so muss zur Beaufschlagung des Susbtrats bzw. Metallblechs über dessen gesamte Breite eine größere Anzahl Austrittsöffnungen oder Düsen verwendet werden als bei der Verwendung von Austrittsöffnungen oder Düsen mit einem größeren Sprühbereich. Die Spaltbreite der Austrittsöffnungen oder Düsen kann mechanisch verändert werden, beispielsweise über Schiebeplättchen, Schraubanordnungen, Metallschellen oder Magnetventile.

Nach einer weiteren vorteilhaften Ausgestaltung des erfindungsgemäßen Verfahrens bzw. der erfindungsgemäßen Einrichtung kann das Schmiermittel in Form eines Sprühnebels auf das Substrat bzw. Metallblech aufgebracht werden.

Bei einer pneumatischen Schmiermittelaufbringung kann das Schmiermittel beim Hindurchtreten durch die Austrittsöffnung bzw. kurz zuvor oder danach mit einem gasförmigen Fluid unter Druck gemischt werden. Als Fluide kommen beispielsweise Druckluft oder CO₂ in Betracht.

Die Sprühnebelmenge beziehungsweise die Sprühnebelfeinheit kann durch eine Variation einer Spaltbreite der Austrittsöffnung eingestellt werden. Je größer die Spaltbreite, desto mehr Schmiermittel kann pro Zeiteinheit durch die Düse hindurchtreten. Je kleiner die Spaltbreite ist, umso feiner kann die Verteilung des Schmiermittels sein, sprich je kleiner die Spaltbreite, desto kleiner die Tröpfchengröße. Eine solche Einstellung kann sowohl bei einer elektrostatischen Schmiermittelaufbringung als auch bei einer pneumatischen Schmiermittelaufbringung zum Tragen kommen.

Wie bereits erwähnt, kann das Schmiermittel vor und/oder nach dem Durchtritt durch die zumindest eine Austrittsöffnung einem elektrischen Feld ausgesetzt werden, wobei die Sprühnebelmenge beziehungsweise Sprühnebelfeinheit durch die Stärke oder Ausrichtung des elektrischen Feldes eingestellt werden. Bei Vorliegen eines elektrischen bzw. elektrostatischen Feldes bei der Beaufschlagung des Substrats bzw. Metallblechs mit Schmiermitteltröpfchen, werden die Tröpfchen elektrostatisch aufgeladen. Beim Auftreffen auf der Metalloberfläche bilden sich gleichmäßig verteilte, aber zueinander beabstandete Tröpfchen auf der Metalloberfläche aus. Die Beabstandung der Tröpfchen resultiert aus der Aufladung der Tröpfchen mit einer Ladung des gleichen Vorzeichens und einer damit einhergehenden Teilchenabstoßung. Die elektrostatische Ladung ist bei gesprühten Tröpfchen vorzugsweise an der Tröpfchenoberfläche lokalisiert, da sich alle Tröpfchen gleicher Ladung versuchen abzustoßen. Unter Anwendung eines elektrischen Feldes lassen sich die Tröpfchen homogen und fein auf der Metalloberfläche verteilen. Weiterhin führt die elektrostatische Aufladung zu einer starken Bindung der Partikel an die Oberfläche des Metallblechs. Das Metallblech kann geerdet sein und weist somit eine der Ladung der Tröpfchen entgegengesetzte Polarität auf.

Nach einer weiteren vorteilhaften Ausgestaltung der Erfindung ist die Steuer- und Regelungseinheit signaltechnisch mit der Applikationseinheit, der Pumpeneinheit und der Sensiereinheit verbunden. Dadurch ist gewährleistet, dass eine zentrale Steuer- und Regelungseinheit der Maschine Steuer- und Regelbefehle an die Applikationseinheit, die Pumpeneinheit und die Sensiereinheit weitergeben kann. Beispielsweise kann im Schritt g) des Verfahrens nach Anspruch 1 nach einer Negativfeststellung ein Befehl zur Änderung eines Stellparameters an die Pumpeneinheit oder die Applikationseinheit abgegeben werden, beispielsweise betreffend die Änderung einer Pumprate oder Spaltbreite einer Austrittsöffnung. Gleichsam ist durch die signaltechnische Verbindung eine Datenweiterleitung zwischen den einzelnen Bestandteilen der Maschine gewährleistet. Auch kann die Steuer- und Regelungseinheit Signale und Daten der Applikationseinheit, der Pumpeneinheit und der Sensiereinheit empfangen.

Im Rahmen der Erfindung kann es von Vorteil sein, die Datenverarbeitungseinheit in die Steuer- und Regelungseinheit zu integrieren. Alternativ kann die Datenverarbeitungseinheit separat zur Steuer- und Regelungseinheit ausgebildet und mit dieser signaltechnisch verbunden sein. Eine integrierte Ausbildung der Datenverarbeitungseinheit und der Steuer- und Regelungseinheit ist einerseits platzsparend und andererseits kann auf die Bereitstellung einer signaltechnischen Verbindung zwischen beiden Komponenten verzichtet werden, bzw. die signaltechnische Verbindung kann auf einer gemeinsamen Leiterplatine ausgeführt sein. Zusätzlich kann es vorgesehen sein an den einzelnen Bestandteilen der Maschine, also beispielsweise der Pumpeneinheit, der Applikationseinheit wie auch an der Messeinheit und der Sensiereinheit Mikrocontroller vorzusehen, die mit der Steuer- und Regelungseinheit in signaltechnischer Verbindung stehen und von der Steuer- und Regelungseinheit ausgehende Signale empfangen und Befehle ausführen. Gleichsam können die Mikrocontroller Signale in Richtung der Steuer- und Regelungseinheit aussenden.

Weiterhin kann es vorteilhaft sein, dass die Datenverarbeitungseinheit und/oder die Steuer- und Regelungseinheit signaltechnisch mit der Messeinheit und der Sensiereinheit verbunden ist. Denn auch die Messeinheit und die Sensiereinheit müssen zur Durchführung der Messungen gesteuert werden. Dies erfolgt bestenfalls in Abstimmung an weitere Prozessparameter. Denn im Ruhezustand der Maschine müssen beispielsweise keine optischen oder spektroskopischen Messungen erfolgen. Ebenso müssen mit der Messeinheit keine Durchflussmessungen durchgeführt werden, wenn die Schmiermittelaufbringung ruht und der Applikationseinheit kein Schmiermittel zugeleitet wird. Solche Verfahrensgegebenheiten werden von der Steuer- und Regelungseinheit bzw. der Datenverarbeitungseinheit kontrolliert und an die Messeinheit sowie Sensiereinheit weitergegeben. Insbesondere wird also der Beginn, das Ende und die Dauer der durchzuführenden Messungen über die Datenverarbeitungseinheit und/oder die Steuer- und Regelungseinheit kontrolliert und gesteuert. Dies kann auch in Verbindung mit an der Sensier- und Messeinheit vorgesehenen Mikrocontrollern vollzogen werden.

Nach einer weiteren vorteilhaften Ausgestaltung der Erfindung ist die zumindest eine Sensiereinheit an einer oberhalb und/oder unterhalb des Substrats bzw. Metallblechs angeordneten Traversiervorrichtung gegenüber dem Metallblech verschiebbar angeordnet. Dadurch ist es möglich räumlich aufgelöste optische oder spektroskopische Messungen, beispielsweise der laserinduzierten Fluoreszenzspektroskopie, durchzuführen. Die Oberfläche des Substrats bzw. Metallblechs kann dabei durch Verschieben der Sensiereinheit über die Traversiervorrichtung mit einem Messbereich, der - im Falle der laserinduzierten Fluoreszenzspektroskipie - dem Fokus eines von einem Quarzfaserbündel ausgehenden Laserspots entspricht, abgerastert werden. Die Traversiervorrichtung kann einachsig oder mehrachsig ausgebildet sein. Die bevorzugt einachsige Ausgestaltung ermöglicht ein Verschieben der Sensiereinheit quer zur Transportrichtung des Substrats bzw. Metallblechs. Die Traversiervorrichtung kann ein Halteelement für die Sensiereinheit aufweisen, vermöge dessen die Sensiereinheit entlang einer quer zum Metallblech verlaufenden Verfahrschiene bewegbar ist. Die Sensiereinheit ist demnach vorzugsweise über die Breite des Metallblechs verschiebbar. Auch eine zusätzliche Verschiebbarkeit entlang der Transportrichtung des Metallblechs ist, wie auch eine zusätzliche Höhenverstellbarkeit, grundsätzlich denkbar. Die Sensiereinheit bzw. das Halteelement kann über Schienen- oder Rollenanordnungen entlang der Verfahrschiene der Traversiervorrichtung geführt sein. Auch eine Anordnung an Lineareinheiten ist möglich. Ferner kann das Halteelement der Traversiervorrichtung als ein die Sensiereinheit tragender Schlitten ausgebildet sein. Die Traversiergeschwindigkeit beträgt vorzugsweise 0.5 - 1 m/s. Daraus ergibt sich die Möglichkeit einer räumlichen Messauflösung von 5 mm. Alternativ kann die Sensiereinheit oberhalb oder unterhalb des Substrats bzw. Metallblechs positionsfest angeordnet sein, d.h. ohne eine bewegliche Anordnung auf einer Traversiervorrichtung. Dabei kann die Sensiereinheit die gesamte Breite des Substrats messtechnisch erfassen.

Wie schon an anderer Stelle erwähnt ist der erste Analyseparameter nach einer weiteren vorteilhaften Ausgestaltung der Erfindung ausgewählt ist aus der Gruppe: absolute Durchflussmenge des Schmiermittels, zeitlich oder räumlich gemittelte Durchflussmenge des Schmiermittels, Volumenstrom des Schmiermittels, Flussgeschwindigkeit des Schmiermittels, Viskosität des Schmiermittels, Pumpendruck, Pumprate, oder einem dazu proportionalen Parameter. Diese Liste ist nicht abschließend. Die aufgeführten Analyseparameter können mit einer im Bereich der Pumpeneinheit oder der Transportleitung vorgesehenen Messeinheit ermittelt werden. Auch können mehrere Messeinheiten zur Messung unterschiedlicher erster Analyseparameter vorgesehen sein. Weiterhin kann der erste Analyseparameter aus ersten Maschinenparametern bestimmt oder abgeleitet werden.

Wie ebenfalls schon an anderer Stelle erwähnt kann der zweite Analyseparameter ausgewählt sein aus der Gruppe: absolute Schmiermittelbedeckung, räumlich gemittelte Schmiermittelbedeckung, räumlich aufgelöste Schmiermittelverteilung, mittlere Schichtdicke des aufgebrachten Schmiermittels, räumlich aufgelöste Schichtdickenverteilung des Schmiermittels, oder einem dazu proportionalen Parameter. Die zweiten Analyseparameter werden im Wege einer optischen oder spektroskopischen Messung, beispielsweise im Wege der laserinduzierten Fluoreszenzspektroskopie, ermittelt. Die dazu vorgesehenen Sensiereinheiten werden über eine Traversiervorrichtung über das Substrat bzw. Metallblech verschoben und nehmen an unterschiedlichen Stellen Messdaten auf. Zur räumlichen Darstellung können die an unterschiedlichen Stellen aufgenommenen Messdaten bzw. daraus extrahierte Werte über eine Ortsachse (z.B. die Breite des Substrats bzw. Blechs) geplottet werden.

Nach einer weiteren Ausgestaltung der Erfindung kann der erste und/oder zweite Analyseparameter eine räumlich oder zeitlich aufgelöste Datenkurve oder einen aus der Datenkurve extrahierten Wert darstellt. Die zweiten Analyseparameter werden vorzugsweise räumlich aufgelöst sensiert, d.h. im Wege der über die Traversiervorrichtung gegenüber dem Susbtrat bzw. Metallblech verschiebbaren Sensiereinheit. Folglich können die so ermittelten Daten mit relativ wenig Aufwand räumlich aufgelöst in Form einer Datenkurve dargestellt werden, beispielsweise als über die Breite des Substrats bzw. Metallblechs dargestellte Schmiermittelbedeckung oder Schichtdicke. In relativ einfacher Weise sind also Verteilungsfunktionen bestimmter Parameter ermittelbar. Hinsichtlich der ersten Analyseparameter kann es sinnvoll sein diese über einen bestimmten Zeitrahmen aufzunehmen, z. B. während des Aufbringens des Schmiermittels auf das Substrat bzw. Metallblech.

Nach einer vorteilhaften Ausgestaltung der Erfindung wird der Güteparameter aus der Summe, der Differenz, dem Produkt, dem Quotienten oder anderweitig aus dem ersten und zweiten Analyseparameter berechnet wird. Insbesondere hat sich eine Berechnung des Güteparameters aus dem Quotienten zwischen einem ersten und einem zweiten Analyseparameter als vorteilhaft herausgestellt. Insbesondere kann der aus der räumlich gemittelten Schmiermittelbedeckung und einer Flussrate bzw. einem dazu proportionalen Wert ermittelte Quotient als aussagekräftiger Güteparameter herausgestellt. Erfindungsgemäß wird der Güteparameter gemäß dem Schritt f) des der Erfindung zugrunde liegenden Verfahrens mit einem ersten Vorgabeparameter abgeglichen. Dies wurde vorangehend schon im Detail erläutert. Der erste Vorgabeparameter kann mathematisch oder empirisch ermittelt werden, beispielsweise basierend auf Erfahrungswerten oder Maschinenkenndaten. Dabei kann auch die Art, Größe und Dicke des Substrats bzw. Metallblechs sowie des Schmiermittels Berücksichtigung finden.

Weiterhin kann der erste Vorgabeparameter manuell vorgegeben werden, wobei er vorzugsweise einen Wert von 1 einnimmt. Insbesondere bei Verwendung eines aus der räumlich gemittelten Schmiermittelbedeckung und einer Flussrate bzw. einem dazu proportionalen Wert ermittelten Quotienten hat sich ein Vorgabeparameter von 1 als vorteilhaft gezeigt. Weicht der Quotient zu stark von dem vorgegebenen Wert von 1 ab, geht dieser also über einen Toleranz- oder Grenzbereich hinaus, so kann dies ein Indiz für eine zu hohe oder zu geringe Schmiermittelmenge auf dem Metallblech sein. In diesem Fall wird, wie bereits erläutert, automatisch zumindest ein Stellparameter über die Steuer- und Regelungseinheit überprüft und/oder geändert. Entspricht der ermittelte Güteparameter dem Vorgabeparameter, so kann eine zusätzliche Kontrollschleife durchlaufen und/oder das Metallblech zum Weitertransport bzw. zur Weiterverarbeitung freigegeben werden.

Von entscheidender Bedeutung für eine hinreichende Bestimmung des Güteparameters - der beispielsweise das Verhältnis der Schmiermittelauflage basierend auf der aufgebrachten Schmiermittelmenge (bestimmbar z.B. aus der Durchflussmenge im Verfahrensschritt b) zu dem gemessenen Auflagewert (bestimmbar z.B. im Wege der optischen oder spektroskopischen Messung mit der Sensiereinheit im Verfahrensschritt d) - ist, dass die im Durchfluss bestimmte Ölmenge möglichst vollständig auf dem Band landet. Dabei sind Verluste an den Rändern (Overspray) bedingt durch gekrümmte Feldlinien des elektrostatischen Feldes zu berücksichtigen. Für unterschiedliche Breiten des Substrats bzw. Metallblechs können solche Verluste über einen segmentierten Ölbalken zur Anpassung an die jeweilige Bandbreite reduziert werden. Nach einer vorteilhaften Ausgestaltung der Erfindung kann der seitliche Verlust numerisch abgeschätzt und entsprechend korrigiert werden. Ein solcher Korrekturfaktor kann in die Berechnung des Güteparameters einbezogen werden.

Nach einer weiteren Ausgestaltung der Erfindung ist der Stellparameter ausgewählt aus der Gruppe: Spaltbreite der Austrittsöffnung, Stärke oder Ausrichtung des elektrischen Feldes, Einschaltdauer des elektrischen Feldes, Luftdruck, absolute Durchflussmenge des Schmiermittels, zeitlich oder räumlich gemittelte Durchflussmenge des Schmiermittels, Volumenstrom des Schmiermittels, Flussgeschwindigkeit des Schmiermittels, Pumpendruck, Pumprate, Aufbringungstemperatur des Schmiermittels. Diese Liste ist nicht abschließend und kann weitere Stellparameter der Maschine umfassen. Die Stellparameter können je nach Art der Schmiermittelaufbringung (z.B. elektrostatisch oder pneumatisch) variieren. Im Falle der Feststellung einer zu hohen Schmiermittelbedeckung über den Güteparameter und den Vorgabeparameter, könnte beispielsweise die Pumprate als Stellparameter reduziert, d.h. abgeändert werden. Im Gegensatz dazu könnte die Pumprate als Stellparameter erhöht werden, sofern die Schmiermittelbedeckung zu gering ist.

Gemäß einer weiteren vorteilhaften Ausgestaltung der Erfindung wird bei Durchführung der Kontrollschleife ein weiterer erster oder zweiter Analyseparameter mit einem zweiten Vorgabeparameter abgeglichen. Dadurch wird eine zusätzliche Beurteilung der aktuellen Schmiermittelsituation auf dem Metallblech ermöglicht. Beispielsweise kann nach dem Abgleich des Güteparameters mit dem ersten Vorgabeparameter eine zusätzliche Information zur aktuellen Schmiermittelsituation auf dem Substrat bzw. Metallblech eingeholt werden. Insbesondere kann dies sinnvoll sein, sofern beim Abgleich des Güteparameters mit dem ersten Vorgabeparameter keine räumlich aufgelösten Werte z.B. zur Schmiermittelbedeckung, sondern nur gemittelte Werte herangezogen werden. Sodann kann im Wege der Kontrollschleife auch die räumliche Verteilung bestimmter erster Analyseparameter Berücksichtigung finden.

Nach einer weiteren vorteilhaften Ausgestaltung der Erfindung kann der zweite Vorgabeparameter ein mathematisch, empirisch oder messtechnisch ermittelter Sollwert oder eine Sollkurve für den ersten oder zweiten Analyseparameter sein. In Frage kommen beispielsweise für eine bestimmte Art, Größe und gewünschte Schmiermittelbeladung charakteristische Sollwerte oder Sollkurven hinsichtlich der ersten oder zweiten Analyseparameter. Diese können auf Erfahrungswerten oder Kalibriermessungen beruhen. Die Resultate von Kalibriermessungen bzw. die genannten Sollwerte oder Sollkurven können in einem elektronischen Datenkatalog abgelegt sein und bei Bedarf von der Datenverarbeitungseinheit oder der Steuerund Regelungseinheit abgerufen werden.

Nach einer weiteren Ausgestaltung der Erfindung wird nach Durchführen der Kontrollschleife eine weitere Negativfeststellung oder Positivfeststellung getroffen, wobei das Substrat bzw. Metallblech im Falle einer Positivfeststellung freigegeben wird. Die diesbezüglichen Vorteile wurden bereits eingangs erläutert. Im Falle einer Negativfeststellung wird das Substrat bzw. Metallblech vorzugsweise als Ausschuss deklariert oder das Substrat bzw. Metallblech wird gereinigt und erneut mit Schmiermittel beaufschlagt. Im Falle einer Positivfeststellung wird das Substrat bzw. Metallblech zum Weitertransport bzw. zur Weiterverarbeitung freigegeben.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt. Weitere Vorteile der Erfindung sind anhand mehrerer einzelner Aspekte des erfindungsgemäßen Verfahrens und der erfindungsgemäßen Einrichtung anhand eines Ausführungsbeispiels beschrieben. Es zeigen:
- **Figur 1**: eine perspektivische Ansicht von Details einer Sensiereinheit als Teil einer Maschine zur Aufbringung eines Schmiermittels auf ein Metallblech;
- **Figur 2**: eine schematische Übersicht über die wesentlichen Komponenten der Maschine zur Aufbringung eines Schmiermittels;
- **Figur 3**: eine schematische Darstellung des erfindungsgemäßen Verfahrensablaufs.

Die vorliegende Erfindung wird beispielhaft anhand der Verwendung eines Metallblechs 2 als Beispiel für ein Substrat erläutert. Das erfindungsgemäße Verfahren bzw. die erfindungsgemäße Einrichtung ist jedoch nicht auf den Einsatz bei Metallblechen beschränkt. Zudem wird nachfolgend auf das Beispiel einer elektrostatischen Schmiermittelaufbringung abgestellt. Dies beschränkt die Erfindung aber nicht auf eine solche Art der Schmiermittelaufbringung.

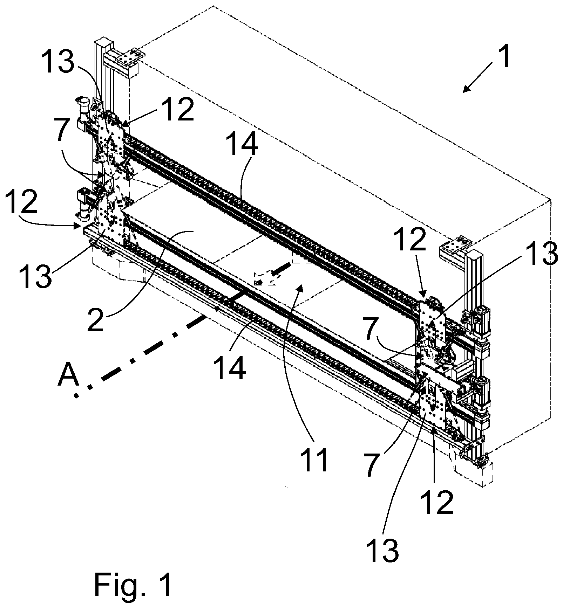

Die Figur 1 zeigt in einer perspektivischen Ansicht Details einer Sensiereinheit 7, die einer Maschine 1 zur Aufbringung eines Schmiermittels 10 auf ein Substrat bzw. Metallblech 2 zugehörig ist. Derartige Maschinen 1 werden auch als Beölungsmaschinen oder Beöler bezeichnet. Eine solche Beölungsmaschine 1 kann in eine Produktions- und/oder Transportlinie für Metallbleche 2 integriert sein, beispielsweise in einem Walz- oder Presswerk. In einer solchen Produktions- und/oder Transportlinie werden Metallbleche 2, die u.a. auch Metallbänder umfassen können, entlang einer Transportachse A bewegt.

Zur Aufbringung eines Schmiermittels 10, durchläuft das Metallblech 2 eine Kammer der Maschine 1. Bei der Kammer kann es sich um eine Sprühnebelkammer 11 handeln. Das Metallblech 2 wird von einer Seite in die Maschine 1 bzw. die Sprühnebelkammer 11 eingeführt. Nach dem Aufbringen des Schmiermittels 10 auf das Metallblech 2 wird das Metallblech 2 aus der Kammer 11 herausgeführt. Der Transport des Metallblechs 2 entlang der Transportachse A kann beispielsweise über Transportbänder oder Transportrollen vollzogen werden.

In der Sprühnebelkammer 11 kann oberseitig und/oder unterseitig des Metallblechs 2 ein Applikationsmodul einer Applikationseinheit mit einer oder mehreren Austrittsöffnungen vorgesehen sein, durch welche das Schmiermittel 10 in Richtung des Metallblechs 2 befördert wird. Den Austrittsöffnungen ist vorzugsweise ein elektrisches Feld nachgelagert, vermöge dessen eine homogene Tröpfchenverteilung des Schmiermittels 10 auf der Oberfläche des Metallblechs 2 gewährleistet wird.

Wie später noch ausgeführt wird, kann die Oberfläche des Metallblechs 2 beim Herausführen aus der Sprühnebelkammer 11 hinsichtlich der Schmiermittelbeladung bzw. der Homogenität des aufgebrachten Schmiermittels 10 mittels einer Sensiereinheit 7 untersucht werden. Dabei können Analyseparameter bestimmt werden, beispielsweise die absolute Schmiermittelbedeckung, die räumlich gemittelte Schmiermittelbedeckung, die räumlich aufgelöste Schmiermittelverteilung, die mittlere Schichtdicke des aufgebrachten Schmiermittels 10, die räumlich aufgelöste Schichtdickenverteilung des Schmiermittels 10, oder ein dazu proportionalen Parameter.

Bei der Sensiereinheit 7 handelt es sich um ein optisches oder spektroskopisches System zur Durchführung optischer oder spektroskopischer Messungen handeln. Beispielsweise kann es sich um ein System zur Durchführung von laserinduzierter Fluoreszenzspektroskopie handeln, auf welches im weiteren Bezug genommen wird. Wie in der Figur 1 angedeutet ist, können ober- und unterseitig des Metallblechs 2 Sensiereinheiten 7 vorgesehen sein. Die Sensiereinheiten 7 sind über einer Traversiervorrichtung 12 quer zur Transportachse A des Metallblechs 2 verschiebbar. Die Traversiervorrichtung 12 kann ein Haltelement 13 für die Sensiereinheiten 7 umfassen, sowie eine Verfahrschiene 14, entlang welcher das Halteelement 13 verschiebbar ist. Zur Messen der vorgenannten Parameter werden die Sensiereinheiten 7 quer zur Transportachse A des Metallblechs 2 verschoben und führen an einer Vielzahl von Positionen fluoreszenzspektroskopische Messungen durch. Die Traversiervorrichtung 12 wie auch die Sensiereinheiten 7 sind außerhalb der Sprühnebelkammer 11 an der Maschine 1 angeordnet. Eine Anordnung innerhalb der Sprühnebelkammer 11 ist aufgrund des vorherrschenden elektrischen Feldes zu vermeiden.

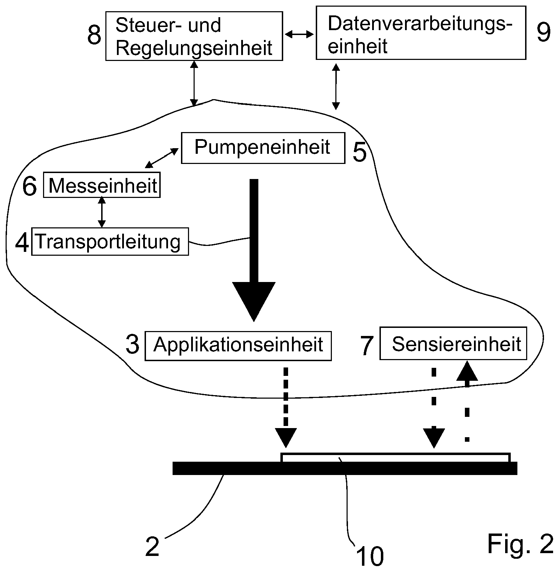

Die Figur 2 zeigt in einer schematischen Übersicht die wesentlichen Komponenten der Maschine 1, die im Rahmen des erfindungsgemäßen Verfahrens zum Einsatz kommt. So umfasst die Maschine 1 eine Pumpeneinheit 5 vermöge dessen ein Schmiermittel 10 über eine Transportleitung 4 (gekennzeichnet durch den Pfeil) in Richtung einer Applikationseinheit 3 befördert wird. Die Pumpeneinheit 5 kann dabei mit einem Schmiermittelreservoir verbunden sein, beispielsweise einem Schmiermitteltank. Gleichsam kann die Pumpeneinheit 5 mit mehreren Schmiermittelreservoirs verbunden sein. Über diese voneinander getrennten Schmiermittelreservoirs können nacheinander verschiedene Schmiermittel 10 auf ein oder mehrere Substrate bzw. Metallbleche 2 aufgebracht werden. Über die Applikationseinheit 3, welche beispielsweise ein aus mehreren Austrittsöffnungen bestehendes Düsensystem bzw. Applikationsmodul umfassen kann, wird das Schmiermittel 10 auf dem Metallblech 2 aufgebracht. Dabei bildet sich auf dem Metallblech 2 in Folge der Schmiermittelaufbringung ein Film des Schmiermittels 10 aus. Wie die Figur 2 weiter zu erkennen gibt, kann eine Messeinheit 6 mit der Pumpeneinheit 5 bzw. der Transportleitung 4 in Verbindung stehen bzw. an diesen Bauteilen angeordnet sein um Durchflussmessungen durchzuführen.

Zudem ist die Maschine 1 mit einer Sensiereinheit 7 versehen, vermöge dessen die Schmiermittelaufbringung auf dem Metallblech 2 überprüft werden kann. Bei der Sensiereinheit 7 handelt es sich vorzugsweise um eine Einrichtung zur Durchführung von laserinduzierter Fluoreszenzspektroskopie. Damit kann beispielsweise die Schmiermittelbeladung oder die Schichtdicke des augebrachten Schmiermittels 10 gemessen werden. Die Pumpeneinheit 5, die Applikationseinheit 3, die Messeinheit 6 und die Sensiereinheit 7 stehen im signaltechnischen Austausch mit einer Steuer- und Regelungseinheit 8. Gleichsam können die genannten Komponenten in einem signaltechnischen Austausch mit einer Datenverarbeitungseinheit 9 stehen. Die Steuer- und Regelungseinheit 8 und die Datenverarbeitungseinheit 9 können als gemeinsames Bauteil ausgebildet sein.

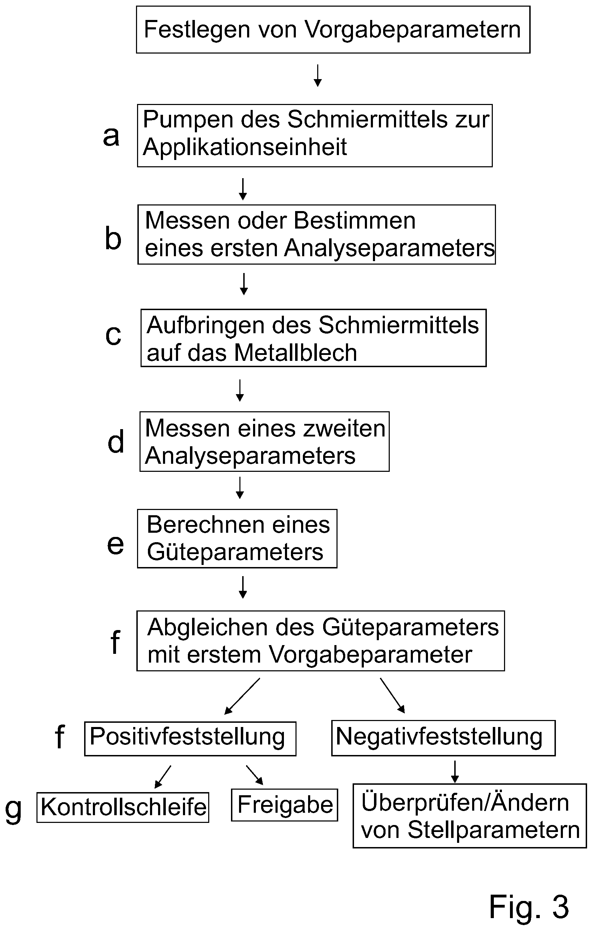

In der Figur 3 sind die wesentlichen Verfahrensschritte des erfindungsgemäßen Verfahrens schematisch wiedergegeben. Zu allererst werden von einem Nutzer oder automatisiert bestimmte Vorgabeparameter festgelegt oder bestimmt. Danach wird zumindest ein Schmiermittel 10 ausgehend von einer Pumpeneinheit 5 in Richtung zumindest einer Applikationseinheit 3 befördert bzw. gepumpt (Schritt a). Der Transport des Schmiermittels 10 kann über eine oder mehrere Transportleitungen 4 erfolgen.

Im Verfahrensschritt b wird ein erster Analyseparameter über zumindest eine an der Pumpeneinheit 5 oder der Transportleitung 4 vorgesehene Messeinheit 6 gemessen oder aus Maschinenparametern bestimmt. Mit der zumindest einen Messeinheit 6 können erste Analyseparameter ermittelt werden, die den Fluss des Schmiermittels 10 in Richtung der Applikationseinheit 3 kennzeichnen. Bei den ersten Analyseparametern kann es sich um folgende Parameter handeln: absolute Durchflussmenge des Schmiermittels 10, zeitlich oder räumlich gemittelte Durchflussmenge des Schmiermittels 10, Volumenstrom des Schmiermittels 10, Flussgeschwindigkeit des Schmiermittels 10, Viskosität des Schmiermittels 10, Pumpendruck, Pumprate, oder einem dazu proportionalen Parameter. Diese Liste ist nicht abschließend. Die Messeinheit 6 kann die Messwerte nach dem Start des Pumpvorgangs während des Pumpens kontinuierlich aufzeichnen. Alternativ ist eine Bestimmung eines ersten Analyseparameters aus Maschinenparametern möglich, beispielsweise aus der Drehzahl Pumpeneinheit 5.

Im Verfahrensschritt c wird das in Richtung der Applikationseinheit 3 beförderte Schmiermittel 10 auf zumindest eine Seite, vorzugsweise jedoch auf beide Seiten des Metallblechs 2 aufgebracht. Dazu sind in der Applikationseinheit 3 vorzugsweise Austrittsöffnungen oder Düsen vorgesehen über welche das Schmiermittel 10 in tröpfchenweise im Sinne eines Sprühnebels auf das Metallblech 2 aufgebracht wird.

Gemäß dem Verfahrensschritt d wird mit der Sensiereinheit 7 zumindest ein zweiter Analyseparameter gemessen. Die zweiten Analyseparameter geben die Schmiermittellage nach dem Auftragen des Schmiermittels 10 auf dem Metallblech 2 wieder. Folgende zweite Analyseparameter können dabei basierend auf den Messergebnissen der zumindest einen Sensiereinheit 7 ermittelt werden: absolute Schmiermittelbedeckung, räumlich gemittelte Schmiermittelbedeckung, räumlich aufgelöste Schmiermittelverteilung, mittlere Schichtdicke des aufgebrachten Schmiermittels 10, räumlich aufgelöste Schichtdickenverteilung des Schmiermittels 10, , oder einem dazu proportionalen Parameter. Diese Liste ist nicht abschließend.

Im anschließenden Verfahrensschritt e wird unter Einsatz der Datenverarbeitungseinheit 9 zumindest ein Güteparameter aus dem zumindest einem ersten Analyseparameter und dem zumindest einen zweiten Analyseparameter berechnet. Der Güteparameter berücksichtigt sowohl die lokale Schmiermittelsituation, als auch Messwerte der Pumpeneinheit 5 und liefert somit eine zuverlässige Grundlage für die Bewertung der Verfahrensqualität und letztlich der Qualität des Schmiermittelauftrags auf dem Metallblech 2. Auch Schmiermittelverluste wie Oversprays können dabei Berücksichtigung finden.

Im Verfahrensschritt f wird der berechnete zumindest eine Güteparameter mit zumindest einem ersten Vorgabeparameter abgeglichen. Weicht der ermittelte Güteparameter von dem Vorgabeparameter ab, so wird in Folge des Abgleichs eine Negativfeststellung getroffen. In Konsequenz der Negativfeststellung können ein oder mehrere Stellparameter der Maschine über die Steuer- und Regelungseinheit überprüft und/oder abgeändert werden (Schritt g).

Die Überprüfung erfolgt vorzugsweise automatisiert, kann aber auch halbautomatisiert oder manuell erfolgen. Im Rahmen der Überprüfung können beispielsweise die folgenden Stellparameter überprüft und mit Sollwerten abgeglichen werden: Spaltbreite der Düse, Stärke des elektrischen Feldes, Einschaltdauer des elektrischen Feldes, absolute Durchflussmenge des Schmiermittels 10, zeitlich oder räumlich gemittelte Durchflussmenge des Schmiermittels 10, Volumenstrom des Schmiermittels 10, Flussgeschwindigkeit des Schmiermittels 10, Pumpendruck, Pumprate, Aufbringungstemperatur des Schmiermittels. Nach der Überprüfung bzw. Abänderung der Stellparameter kann die Schmiermittelaufbringung an einem neuen Metallblech 2 fortgesetzt werden oder an dem vormals beaufschlagten Metallblech 2 nach dessen Reinigung wiederholt werden. Auch kann das untersuchte Metallblech 2 als Ausschuss deklariert und aus dem Transport- bzw. Produktionsprozess entfernt werden. Damit ist ein geschlossener Steuerungs- und Regelungskreis (closed-loop) gewährleistet, das Verfahren wird nach Ausführung der Verfahrensschritte automatisch fortgesetzt und ist flexibel an die vorherrschenden Gegebenheiten anpassbar, gewissermaßen im Sinne eines Selbstlernprozesses.

Beim Treffen einer Positivfeststellung (ebenfalls Schritt f) entspricht der berechnete Güteparameter dem Vorgabeparameter bzw. fällt in einen den Vorgabeparameter definierenden Wertebereich. Toleranzbereiche können dabei berücksichtigt werden. Um die Zuverlässigkeit und Genauigkeit bei der Bewertung der Verfahrensqualität weiter zu verbessern, kann selbst bei einer initialen Positivfeststellung eine weitere Kontrollschleife durchlaufen werden (Schritt g). Jedoch kann das Verfahren auch ohne den Durchlauf der Kontrollschleife ausgestaltet werden. Im letzteren Fall wird das Metallblech 2 nach der Positivfeststellung freigegeben (Schritt g) und kann entlang einer Transportrichtung weiterbefördert werden. Sofern der Durchlauf einer Kontrollschleife vorgesehen ist, wird ein weiterer erster und/oder zweiter Analyseparameter mit einem zweiten Vorgabeparameter abgeglichen.

Nach Durchlaufen der Kontrollschleife wird eine weitere Negativ- oder Positivfeststellung getroffen (nicht dargestellt). Eine Positivfeststellung kann auch dann erfolgen, wenn der weitere erste und/oder zweite Analyseparameter nicht exakt dem zweiten Vorgabeparameter entspricht, sondern innerhalb eines vorgegebenen Toleranz- oder Grenzbereiches liegt. Bei Vorliegen einer Positivfeststellung wird das Metallblech freigegeben. Liegt eine Negativfeststellung vor, so wird das Metallblech 2 entweder als Ausschuss deklariert und nicht zur Weiterbearbeitung bzw. zum Weitertransport freigegeben oder es findet eine Reinigung des Metallblechs 2 mit anschließender erneuter Zuführung in die Maschine 1 zur Schmiermittelaufbringung statt.

### Bezugszeichenliste

- 1: Maschine
- 2: Metallblech
- 3: Applikationseinheit
- 4: Transportleitung
- 5: Pumpeneinheit
- 6: Messeinheit
- 7: Sensiereinheit
- 8: Steuer- und Regelungseinheit
- 9: Datenverarbeitungseinheit
- 10: Schmiermittel
- 11: Sprühnebelkammer
- 12: Traversiervorrichtung
- 13: Haltelement
- 14: Verfahrschiene

- A: Transportachse

## Patentansprüche

1. Verfahren zur automatisierten Steuerung- und Regelung einer Maschine (1) zur ein- oder beidseitigen Schmiermittelaufbringung auf einem Substrat, insbesondere einem Metallblech (2), wobei die Maschine (1) umfasst: zumindest eine Applikationseinheit (3), zumindest eine mit der zumindest einen Applikationseinheit (3) über zumindest eine Transportleitung (4) verbundene Pumpeneinheit (5), zumindest eine Sensiereinheit (7) zur Durchführung eines räumlich aufgelösten optischen oder spektroskopischen Messverfahrens, sowie eine Datenverarbeitungseinheit (9), umfassend die folgenden Schritte:
a. unter Einsatz der zumindest einen Pumpeneinheit (5): Befördern des Schmiermittels (10) in Richtung der zumindest einen Applikationseinheit (3) über die zumindest eine Transportleitung (4);
b. Messen von zumindest einem ersten Analyseparameter mit zumindest einer der zumindest einen Pumpeneinheit (5) zugeordneten Messeinheit (6) oder Bestimmen von zumindest einem ersten Analyseparameter aus Maschinenparametern;
c. unter Einsatz der zumindest einen Applikationseinheit (3): Aufbringen des Schmiermittels (10) auf zumindest einer Seite des Substrats bzw. Metallblechs (2);
d. Messen von zumindest einem zweiten Analyseparameter mit der Sensiereinheit (7);
e. unter Einsatz der Datenverarbeitungseinheit (9): Berechnen von zumindest einem Güteparameter;
f. unter Einsatz der Datenverarbeitungseinheit (9): Abgleichen des zumindest einen Güteparameters mit zumindest einem ersten Vorgabeparameter, wobei in Folge des Abgleichs eine Positiv- oder Negativfeststellung getroffen wird;
**gekennzeichnet durch**:
g. im Falle einer Negativfeststellung: automatisches Überprüfen und/oder Ändern von zumindest einem Stellparameter über eine von der Maschine (8) umfassten Steuer- und Regelungseinheit (8); und im Falle einer Positivfeststellung: Durchführen einer Kontrollschleife und/oder Freigeben des Substrats,
wobei im Schritt e. der zumindest eine Güteparameter aus dem zumindest einen ersten Analyseparameter und dem zumindest einen zweiten Analyseparameter berechnet wird.

2. Verfahren nach Anspruch 1, **dadurch gekennzeichnet, dass** die Applikationseinheit (3) ein unteres Applikationsmodul und/oder ein oberes Applikationsmodul aufweist, wobei ein jedes Applikationsmodul zumindest eine Austrittsöffnung aufweist, durch die das Schmiermittel (10) in Richtung des Substrats bzw. des Metallblechs (2) hindurchtritt.

3. Verfahren nach Anspruch 2, **dadurch gekennzeichnet, dass** das Substrat bzw. das Metallblech beim Aufbringen des Schmiermittels (10) zwischen dem unteren und oberen Applikationsmodul angeordnet wird.

4. Verfahren nach Anspruch 1, **dadurch gekennzeichnet, dass** der erste Analyseparameter ausgewählt ist aus der Gruppe: absolute Durchflussmenge des Schmiermittels (10), zeitlich oder räumlich gemittelte Durchflussmenge des Schmiermittels (10), Volumenstrom des Schmiermittels (10), Flussgeschwindigkeit des Schmiermittels (10), Viskosität des Schmiermittels (10), Pumpendruck, Pumprate, oder einem dazu proportionalen Parameter.

5. Verfahren nach Anspruch 1, **dadurch gekennzeichnet, dass** der zweite Analyseparameter ausgewählt ist aus der Gruppe: absolute Schmiermittelbedeckung, räumlich gemittelte Schmiermittelbedeckung, räumlich aufgelöste Schmiermittelverteilung, mittlere Schichtdicke des aufgebrachten Schmiermittels (10), räumlich aufgelöste Schichtdickenverteilung des Schmiermittels (10), oder einem dazu proportionalen Parameter.

6. Verfahren nach einem der vorangehenden Ansprüche, **dadurch gekennzeichnet, dass** der erste und/oder zweite Analyseparameter eine räumlich oder zeitlich aufgelöste Datenkurve oder einen aus der Datenkurve extrahierten Wert darstellt.

7. Verfahren nach einem der vorangehenden Ansprüche, **dadurch gekennzeichnet, dass** der Güteparameter aus der Summe, der Differenz, dem Produkt, dem Quotienten oder anderweitig aus dem ersten und zweiten Analyseparameter berechnet wird.

8. Verfahren nach Anspruch 1, **dadurch gekennzeichnet, dass** der erste Vorgabeparameter mathematisch oder empirisch ermittelt wird.

9. Verfahren nach Anspruch 1, **dadurch gekennzeichnet, dass** der erste Vorgabeparameter manuell vorgegeben wird und vorzugsweise einen Wert von 1 einnimmt.

10. Verfahren nach einem der vorangehenden Ansprüche, **dadurch gekennzeichnet, dass** der Stellparameter ausgewählt ist aus der Gruppe: Spaltbreite der Austrittsöffnung, Stärke oder Ausrichtung des elektrischen Feldes, Einschaltdauer des elektrischen Feldes, Luftdruck, absolute Durchflussmenge des Schmiermittels (10), zeitlich oder räumlich gemittelte Durchflussmenge des Schmiermittels (10), Volumenstrom des Schmiermittels (10), Flussgeschwindigkeit des Schmiermittels (10), Pumpendruck, Pumprate, Aufbringungstemperatur des Schmiermittels (10).

11. Verfahren nach einem der vorangehenden Ansprüche, **dadurch gekennzeichnet, dass** bei Durchführung der Kontrollschleife ein weiterer erster oder zweiter Analyseparameter mit einem zweiten Vorgabeparameter abgeglichen wird.

12. Verfahren nach Anspruch 10, **dadurch gekennzeichnet, dass** der zweite Vorgabeparameter ein mathematisch, empirisch oder messtechnisch ermittelter Sollwert oder eine Sollkurve für den ersten oder zweiten Analyseparameter ist.

13. Verfahren nach einem der vorangehenden Ansprüche, **dadurch gekennzeichnet, dass** nach Durchführen der Kontrollschleife eine weitere Negativfeststellung oder Positivfeststellung getroffen wird, wobei das Substrat bzw. das Metallblech (2) im Falle einer Positivfeststellung freigegeben wird.

14. Einrichtung zur automatisierten Steuerung- und Regelung einer Maschine (1) zur ein- oder beidseitigen Schmiermittelaufbringung auf einem Substrat, insbesondere einem Metallblech (2), wobei die Maschine (1) umfasst:
a. zumindest eine Applikationseinheit (3) zum Aufbringen des Schmiermittels (10) auf zumindest einer Seite des Substrats bzw. Metallblechs (2),
b. zumindest eine mit der zumindest einen Applikationseinheit (3) über zumindest eine Transportleitung (4) verbundene Pumpeneinheit (5) zum Befördern des Schmiermittels (10) in Richtung der zumindest einen Applikationseinheit (3) über die zumindest eine Transportleitung (4),
c. zumindest eine der Pumpeneinheit (5) zugeordnete Messeinheit (6) zum Messen von zumindest einem ersten Analyseparameter oder eine Einheit zum Bestimmen von zumindest einem ersten Analyseparameter aus Maschinenparametern,
d. zumindest eine Sensiereinheit (7) zur Durchführung eines räumlich aufgelösten optischen oder spektroskopischen Messverfahrens und zum Messen von zumindest einem zweiten Analyseparameter,
e. eine Datenverarbeitungseinheit (9), die dazu eingerichtet ist,
i. zumindest einen Güteparameter zu berechnen,
ii. den zumindest einen Güteparameter mit zumindest einem ersten Vorgabeparameter abzugleichen, und
iii. eine Positiv- oder Negativfeststellung in Folge des Abgleichs zu treffen,
**gekennzeichnet durch**
f. eine Steuer- und Regelungseinheit (8), die dazu eingerichtet ist, im Falle
i. einer Negativfeststellung durch die Datenverarbeitungseinheit (9) zumindest einen Stellparameter automatisch zu überprüfen und/oder zu ändern, und
ii. im Falle einer Positivfeststellung eine Kontrollschleife zu durchlaufen oder/und das Substrat bzw. Metallblech (2) für eine Weiterverarbeitung freizugeben.
sowie **dadurch, dass** die Datenverarbeitungseinheit (9) dazu eingerichtet ist, den zumindest einen Güteparameter aus dem zumindest einen ersten und zweiten Analyseparameter zu berechnen.

15. Einrichtung nach Anspruch 14, **dadurch gekennzeichnet, dass** die Einrichtung zur Verwendung in einem Verfahren nach einem der Ansprüche 1 bis 13 eingerichtet ist.

## Claims

1. Method for automated control and regulation of a machine (1) for one- or two-sided lubricant application on a substrate, in particular, a metal sheet (2), wherein the machine (1) comprises: at least one application unit (3), at least one pump unit (5) connected to the at least one application unit (3) via at least one transport line (4), at least one sensing unit (7) for carrying out a spatially resolved optical or spectroscopic measurement method, as well as a data processing unit (9), comprising the following steps:
a. using the at least one pump unit (5): conveying the lubricant (10) in the direction of the at least one application unit (3) via the at least one transport line (4);
b. measurement of at least one first analysis parameter with at least one measurement unit (6) assigned to the at least one pump unit (5) or determination of at least one first analysis parameter from machine parameters;
c. using the at least one application unit (3): application of the lubricant (10) on at least one side of the substrate or metal sheet(2);
d. measurement of at least one second analysis parameter with the sensing unit (7);
e. using the data processing unit (9): calculation of at least one quality parameter;
f. using the data processing unit (9):
comparison of the at least one quality parameter with at least one first default parameter, wherein a positive or negative determination is made as a result of the comparison;
**characterized by**:
g. in the case of a negative determination: automatic checking and/or modifying at least one control parameter via a control and regulation unit (8) comprised by the machine (8); and in the case of a positive determination: executing a control loop and/or releasing the substrate,
wherein, at step e, the at least one quality parameter is calculated from the at least one first analysis parameter and the at least one second analysis parameter.

2. The method according to Claim 1, **characterized in that** the application unit (3) comprises a lower application module and/or an upper application module, wherein each application module comprises at least one outlet opening, through which the lubricant (10) passes in the direction of the substrate or the metal sheet (2).

3. The method of Claim 2, **characterized in that** the substrate or the metal sheet is arranged between the lower and upper application module when applying the lubricant (10).

4. The method according to Claim 1, **characterized in that** the first analysis parameter is selected from the group: absolute flow rate of the lubricant (10), temporally or spatially averaged flow rate of the lubricant (10), volumetric flow of the lubricant (10), flow rate of the lubricant (10), viscosity of the lubricant (10), pump pressure, pump rate, or a parameter that is proportional thereto.

5. The method according to Claim 1, **characterized in that** the second analysis parameter is selected from the group: absolute lubricant coverage, spatially averaged lubricant coverage, spatially resolved lubricant distribution, average layer thickness of the applied lubricant (10), spatially resolved layer thickness distribution of the lubricant (10), or a parameter that is proportional thereto.

6. The method according to any one of the preceding claims, **characterized in that** the first and/or second analysis parameter represents a spatially or temporally resolved data curve or a value extracted from the data curve.

7. The method according to any one of the preceding claims, **characterized in that** the quality parameter is calculated from the sum, the difference, the product, the quotient or otherwise from the first and second analysis parameter.

8. The method according to Claim 1, **characterized in that** the first specification parameter is determined mathematically or empirically.

9. The method according to Claim 1, **characterized in that** the first default parameter is manually specified and preferably assumes a value of 1.

10. The method according to one of the preceding claims, **characterized in that** the control parameter is selected from the group: gap width of the outlet opening, strength or orientation of the electric field, duty cycle of the electric field, air pressure, absolute flow rate of the lubricant (10), temporally or spatially averaged flow rate of the lubricant (10), volumetric flow of the lubricant (10), flow rate of the lubricant (10), pump pressure, pump rate, application temperature of the lubricant (10).

11. The method according to any one of the preceding claims, **characterized in that**, during execution of the control loop, another first or second analysis parameter is compared with a second default parameter.

12. The method according to Claim 10, **characterized in that** the second default parameter is a mathematically, empirically or metrologically determined target value or a nominal curve for the first or second analysis parameter.

13. The method according to any one of the preceding claims, **characterized in that**, after execution of the control loop, a further negative determination or positive determination is made, wherein the substrate or the metal sheet (2) is released in the case of a positive determination.

14. Device for automated control and regulation of a machine (1) for single or double-sided lubricant application on a substrate, in particular, a metal sheet (2), wherein the machine (1) comprises:
a. at least one application unit (3) for applying the lubricant (10) to at least one side of the substrate or metal sheet (2),
b. at least one pump unit (5) connected to the at least one application unit (3) via at least one transport line (4) for conveying the lubricant (10) in the direction of the at least one application unit (3) via the at least one transport line (4),
c. at least one measurement unit (6) assigned to the pump unit (5) for measuring at least one first analysis parameter or a unit for determining the at least one first analysis parameter from machine parameters,
d. at least one sensing unit (7) for carrying out a spatially resolved optical or spectroscopic measurement method and for measuring at least one second analysis parameter,
e. a data processing unit (9), which is set up for
i. calculating at least one quality parameter,
ii. comparing the at least one quality parameter with at least one first default parameter, and
iii. making a positive or negative determination as a result of the comparison,
**characterized by**
f. a control and regulation unit (8), which is set up, in the event of:
i. a negative determination by the data processing unit (9), for automatically checking and/or modifying at least one control parameter, and
ii. in the event of a positive determination, for executing a control loop and/or releasing the substrate or metal sheet (2) for further processing.
and **characterized in that** the data processing unit (9) is set up for calculating the at least one quality parameter from the at least one first and second analysis parameter.

15. Device according to Claim 14, **characterized in that** the device is set up for use in a method according to any one of the Claims 1 to 13.

## Revendications

1. Procédé de commande et de régulation automatique d'une machine (1) pour l'application de lubrifiant sur un ou deux côtés sur un substrat, en particulier une tôle métallique (2), sachant que la machine (1) comprend : au moins une unité d'application (3), au moins une unité de pompage (5) reliée à au moins une unité d'application (3) par au moins une conduite de transport (4), au moins une unité de détection (7) pour l'exécution d'un procédé de mesure optique ou spectroscopique à résolution dans l'espace, ainsi qu'une unité de traitement des données (9), comprenant les étapes suivantes :
a) en utilisant au moins une unité de pompage (5) : transport du lubrifiant (10) en direction d'au moins une unité d'application (3) par au moins une conduite de transport (4),
b) mesure d'au moins un premier paramètre d'analyse avec au moins une unité de mesure (6) attribuée à au moins une unité de pompage (5) ou détermination d'au moins un premier paramètre d'analyse à partir des paramètres de machine,
c) en utilisant au moins une unité d'application (3) : application du lubrifiant (10) sur au moins un côté du substrat ou de la tôle métallique (2),
d) mesure d'au moins un deuxième paramètre d'analyse avec l'unité de détection (7),
e) en utilisant l'unité de traitement des données (9) : calcul d'au moins un paramètre de qualité,
f) en utilisant l'unité de traitement des données (9) : ajustement d'au moins un paramètre de qualité avec au moins un premier paramètre de consigne, sachant qu'à la suite de l'ajustement, une constatation positive ou négative est établie,
**caractérisé par** :
g) en cas d'une constatation négative : contrôle automatique et/ou modification d'au moins un paramètre de réglage par une unité de commande et de réglage (8) comprise dans la machine (8), et en cas d'une constatation positive : exécution d'une boucle de contrôle et/ou validation du substrat,
sachant que dans l'étape e), au moins un paramètre de qualité est calculé à partir d'au moins un premier paramètre d'analyse et d'au moins un deuxième paramètre d'analyse.

2. Procédé selon la revendication 1, **caractérisé en ce que** l'unité d'application (3) comporte un module d'application inférieur et/ou un module d'application supérieur, sachant que chaque module d'application comporte au moins une ouverture de sortie que traverse le lubrifiant (10) en direction du substrat ou de la tôle métallique (2).

3. Procédé selon la revendication 2, **caractérisé en ce que** le substrat ou la tôle métallique est disposé(e) entre le module d'application inférieur et supérieur lors de l'application du lubrifiant (10).

4. Procédé selon la revendication 1, **caractérisé en ce que** le premier paramètre d'analyse est choisi à partir du groupe : quantité de débit absolue du lubrifiant (10), quantité de débit déterminée dans le temps et dans l'espace du lubrifiant (10), débit volumétrique du lubrifiant (10), vitesse d'écoulement du lubrifiant (10), viscosité du lubrifiant (10), pression de pompage, débit de pompage ou un paramètre proportionnel à ces éléments.

5. Procédé selon la revendication 1, **caractérisé en ce que** le deuxième paramètre d'analyse est choisi à partir du groupe : quantité de débit absolue du lubrifiant (10), couverture de lubrifiant déterminée dans l'espace, répartition du lubrifiant à résolution dans l'espace, épaisseur de couche moyenne du lubrifiant (10) appliqué, répartition de l'épaisseur de couche du lubrifiant (10) à résolution dans l'espace ou un paramètre proportionnel à ces éléments.

6. Procédé selon l'une quelconque des revendications précédentes, **caractérisé en ce que** le premier et/ou le deuxième paramètre d'analyse représente une courbe de données à résolution dans le temps et dans l'espace ou une valeur extraite de la courbe de données.

7. Procédé selon l'une quelconque des revendications précédentes, **caractérisé en ce que** le paramètre de qualité est calculé à partir du total, de la différence, du produit, du quotient ou autrement à partir du premier ou du deuxième paramètre d'analyse.

8. Procédé selon la revendication 1, **caractérisé en ce que** le premier paramètre de consigne est déterminé de manière mathématique ou empirique.

9. Procédé selon la revendication 1, **caractérisé en ce que** le premier paramètre de consigne est manuellement prédéfini et prend de préférence une valeur de 1.

10. Procédé selon l'une quelconque des revendications précédentes, **caractérisé en ce que** le paramètre de réglage est choisi à partir du groupe : largeur d'interstice de l'ouverture de sortie, intensité ou orientation du champ électrique, durée de fonctionnement du champ électrique, pression d'air, quantité de débit absolue du lubrifiant (10), quantité de débit déterminée dans le temps et dans l'espace du lubrifiant (10), débit volumétrique du lubrifiant (10), vitesse d'écoulement du lubrifiant (10), pression de pompage, débits de pompage, température d'application du lubrifiant (10).

11. Procédé selon l'une quelconque des revendications précédentes, **caractérisé en ce que** lors du passage de la boucle de contrôle, un autre premier ou deuxième paramètre d'analyse est ajusté avec un deuxième paramètre de consigne.

12. Procédé selon la revendication 10, **caractérisé en ce que** le deuxième paramètre de consigne est une valeur théorique déterminée de manière mathématique, empirique ou métrologique ou une courbe théorique pour le premier ou le deuxième paramètre d'analyse.

13. Procédé selon l'une quelconque des revendications précédentes, **caractérisé en ce qu'**après passage de la boucle de contrôle, une autre constatation négative ou constatation positive est établie, sachant que le substrat ou la tôle métallique (2) est validée en cas d'une constatation positive.

14. Système de commande et de régulation automatique d'une machine (1) pour l'application de lubrifiant sur un ou deux côtés sur un substrat, en particulier une tôle métallique (2), sachant que la machine (1) comprend :
a) au moins une unité d'application (3) pour appliquer le lubrifiant (10) sur au moins un côté du substrat ou de la tôle métallique (2),
b) au moins une unité de pompage (5) reliée à au moins une unité d'application (3) par au moins une conduite de transport (4) pour transporter le lubrifiant (10) en direction d'au moins une unité d'application (3) par au moins une conduite de transport (4),
c) au moins une unité de mesure (6) attribuée à l'unité de pompage (5) pour mesurer au moins un premier paramètre d'analyse ou une unité pour déterminer au moins un premier paramètre d'analyse à partir des paramètres de machine,
d) au moins une unité de détection (7) pour l'exécution d'un procédé de mesure optique ou spectroscopique à résolution dans l'espace et pour mesurer au moins un deuxième paramètre d'analyse,
e) une unité de traitement de données (9), qui est agencée,
i. pour calculer au moins un paramètre de qualité,
ii. pour ajuster au moins un paramètre de qualité avec au moins un premier paramètre de consigne, et
iii. pour établir une constatation positive ou négative à la suite de l'ajustement,
**caractérisé par**
f) une unité de commande et de régulation (8), qui est agencée,
i. pour vérifier et/ou modifier automatiquement au moins un paramètre de réglage, en cas de constatation négative par l'unité de traitement des données (9), et
ii. pour faire passer une boucle de contrôle et/ou valider le substrat ou la tôle métallique (2) pour une continuation de traitement, en cas d'une constatation positive,
et par le fait que l'unité de traitement des données (9) est agencée pour calculer au moins un paramètre de qualité à partir d'au moins un premier et un deuxième paramètre d'analyse.

15. Système selon la revendication 14, **caractérisé en ce que** le système est agencé pour l'utilisation dans un procédé selon l'une quelconque des revendications 1 à 13.
